(19) Europäisches Patentamt
European Patent Office
Office européen des brevets

(11) **EP 3 467 167 A1**

(12) **EUROPEAN PATENT APPLICATION**

(43) Date of publication:
**10.04.2019 Bulletin 2019/15**

(51) Int Cl.:
*D02G 1/04* *(2006.01)*    *D02G 1/12* *(2006.01)*
*D02G 1/16* *(2006.01)*    *D02J 1/08* *(2006.01)*
*E01C 13/08* *(2006.01)*

(21) Application number: **17195136.1**

(22) Date of filing: **06.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Polytex Sportbeläge
Produktions-GmbH
47929 Grefrath (DE)**

(72) Inventors:
• **SICK, Stephan
47877 Willich (DE)**

• **NEUHOFF, Ulrich
47228 Duisburg (DE)**
• **LOHR, Ivo
47906 Kempen (DE)**
• **HALLY, Stefan
41334 Nettetal (DE)**

(74) Representative: **Richardt Patentanwälte PartG
mbB
Wilhelmstraße 7
65185 Wiesbaden (DE)**

Remarks:
Amended claims in accordance with Rule 137(2)
EPC.

(54) **ARTIFICIAL TURF WITH TEXTURED YARN AND PRODUCTION METHOD**

(57)    The invention provides for textured artificial turf yarn, a method of manufacturing thereof, an artificial turf carpet, and a method of manufacturing thereof. The method of manufacturing a textured artificial turf yarn (122) comprises: providing (600) a monofilament yarn (119), wherein the monofilament yarn comprises a polymer blend of polymers (138, 139; 402, 404; 402, 404, 502); receiving (602) differential scanning calorimetry, DSC, data of a sample of the polymer blend; determining (604) one or more melting temperatures of the monofilament yarn using the DSC data; and texturing (606) the monofilament yarn within a chosen temperature range using a texturing device (114) to provide a textured artificial turf yarn, wherein the chosen temperature range is selected using the one or more melting temperatures..

Fig. 1

**Description**

**Field of the invention**

This invention relates to artificial turf, and more particularly to an artificial turf with textured yarn and to a production method for textured yarn.

**Background and related art**

Artificial turf or artificial grass is a material that is made up of fibers used to replace natural grass. The structure of the artificial turf is designed such that the artificial turf has an appearance which resembles natural grass. Typically artificial turf is used as a surface for sports such as soccer, American football, rugby, tennis, golf, and for playing fields or exercise fields. Furthermore, artificial turf is frequently used for landscaping applications.

Artificial turf may be manufactured using techniques for manufacturing carpets. For example, artificial turf fibers which have the appearance of grass blades may be tufted or attached to a backing. Artificial turf does not need to be irrigated or trimmed and has many other advantages regarding maintenance effort and other aspects. Irrigation can be difficult due to regional restrictions for water usage. In other climatic zones the re-growing of grass and re-formation of a closed grass cover is slow compared to the damaging of the natural grass surface by playing and/or exercising on the field. Artificial turf does not need sunlight and thus can be used in places where there is not enough sunlight to grow natural grass. To ensure that artificial turf replicates the playing qualities of good quality natural grass, artificial turf needs to be made of materials that will not increase the risk of injury to players and that are of adequate durability. Many sports fields are subjected to high-intensity use relating to player-to-surface interactions and ball-to-surface interactions. The surface of the artificial turf fibers must be smooth enough to prevent injuries to the skin of the players when sliding on the surface, but at the same time must be sufficiently embedded into the substructure to prevent the fibers from coming loose. Thus, the materials used for producing artificial turf must have highly specific properties regarding smoothness, brittleness, resistance to shear forces, etc.

**Summary**

The following definitions are provided to determine how terms used in this application, and in particular, how the claims, are to be construed. The organization of the definitions is for convenience only and is not intended to limit any of the definitions to any particular category.

A "polymer blend," as understood herein, is a mixture of polymers, which can have different types (e.g., different types of polyethylene). The polymer blend can comprise various additives added to the polymer mixture. The polymer blend can be at least a three-phase system. A three-phase system as used herein encompasses a mixture that separates out into at least three distinct phases. The polymer blend can comprise a first polymer, a second polymer, and a compatibilizer. These three items form the phases of the three-phase system. If there are additional polymers or compatibilizers added to the system then the three-phase system may be increased to a four, five, or more phase system. The first polymer and the second polymer are immiscible. The first polymer forms polymer beads surrounded by the compatibilizer within the second polymer.

The term "polymer blend," as understood herein, encompasses the term "polymer mixture". The term "blend," as understood herein, encompasses both a physical mixture of polymer particles on a macroscopic scale and a dispersion of polymers on a molecular scale.

The terms "polymer bead" and "beads" may refer to a localized region, such as a droplet, of a polymer that is immiscible in the second polymer. The polymer beads may in some instances be round or spherical or oval-shaped, but they may also be irregularly shaped. In some instances the polymer bead will typically have a size of approximately 0.1 to 3 micrometers, preferably 1 to 2 micrometers in diameter. In other examples, the polymer beads will be larger. They may, for instance, have a diameter up top 50 micrometers.

A polymer blend may also be composed of compatible and miscible polymeric components. Compatibility means, as understood herein, that blending of, e.g., two distinct polymers, leads to an enhancement of at least one desired property, when comparing the blend to one of the two individual blend components. Ideally, the performance of the blend lies in between the range, which is flanked by the two blend components, in fact, in strong relationship to the concentration ratio. However, compatibility is only given in some exceptional cases, mostly related to completely amorphous polymers. In nearly all other polymer mixtures, an enhancement of properties fails and the resulting blend stays far behind the property profile of the involved blend components. Polymer miscibility, as used here, is meant in a thermodynamic sense and can be compared to solubility. Completely miscible polymers form a single phase continuity upon mixing, i.e., one component is fully dispersed in the other component. This is in most cases true for amorphous polymers, but it is a rare case for semi-crystalline polymers. Complete miscibility would also require co-crystallization of the crystalline phase. This explicitly would affect the melting behavior of polymeric blends.

The term "polymorphism" or "polymorphic modification," as used herein, refers to the fact that solid matter is able to exist in different forms of crystal structures. This may include not only different crystallographic unit cells but different crystal imperfections as well.

The "melting temperature" is, as understood here, a characteristic temperature of a polymer blend, at which at least a portion of a crystalline fraction of one of the polymers of the polymer blend melts. In the case when a crystalline fraction of the polymer of the polymer blend has polymorphism, then the polymorphic modification of the polymer having polymorphism has a respective melting temperature at which at least a portion of the polymer has polymorphism. Melting at the melting temperature is a process wherein the thermal energy in a crystalline fraction of a polymer is sufficient to overcome the intermolecular forces of attraction in the crystalline lattice so that the lattice breaks down and at least a portion of the crystalline fraction becomes a liquid, i.e., it melts. Further in the text, the term "melting temperature" of a polymer refers to a melting process of its crystalline fraction without explicit reference to the latter. This formulation is in conformity with the general practice, because purely crystalline polymers are very rarely used and are quite difficult to produce.

The "sigmoid (sigmoidal) function" is, as understood here, a limited function having non-positive or non-negative derivative and a characteristic S-shaped curve. The sigmoid function can be, for instance, the logistic function expressed by the following formula: $S(x)=1/(1+\exp(-x))$.

Utilization of textured (curled) yarns in artificial turf carpets may provide for the above-mentioned required properties of the artificial turf carpets. Textured yarns are different from flat monofilament yarns in that they are irregularly crimped. The textured yarns exhibit a zig-zag shape having at least one of the characteristic features such as kinks, jogs, bends, crinkles, buckling, and curls. These features make the textured yarns more voluminous and soft when manufactured into artificial turf, compared to flat monofilament fibers. The textured yarn may also be advantageous over flat yarn concerning the capability of holding infill material in its place, i. e. reducing the splash of infill material when, e. g. a ball hits the ground.

The invention provides for an artificial turf carpet, a method of manufacturing the artificial turf carpet, a textured (curled) artificial turf yarn, and a method of manufacturing the textured (curled) artificial turf yarn as formulated in the independent claims. Embodiments are given in the dependent claims.

In one aspect the invention provides for a method of manufacturing a textured artificial turf yarn using a texturing device and a controller operable to hold an actual temperature of a texturing process in the texturing device at a desired temperature, wherein the method comprises: providing a monofilament yarn, wherein the monofilament yarn comprises a polymer blend of polymers; receiving differential scanning calorimetry (DSC) data of a sample of the polymer blend ; determining one or more melting temperatures of the monofilament yarn using the DSC data; determining a desired temperature of the texturing process using the one or more melting temperatures; and texturing the monofilament yarn using the texturing device to provide the textured artificial turf yarn, wherein the controller is programmed to hold the actual temperature at the determined desired temperature. The monofilament yarn may have, for instance, a width of 1-1.1 mm and a thickness of 0.09-0.11 mm. The monofilament yarn weight may typically reach 50-3000 dtex. The DSC data can be measured by using a DSC system.

Utilization of the DSC data may be advantageous, because it may provide for a melting temperature of the polymer (or its particular polymorphic modification) in the polymer blend. As discussed further in greater detail, the texturing (curling) of the monofilament yarn may be performed within the temperature range, in which at least a portion of a crystalline fraction (or of a polymorphic modification) of at least one of the polymers of the polymer blend remains in a solid state. Thus the knowledge of the melting temperatures determined using DSC data may provide for the temperature range that may be optimal for the texturing (curling) process.

In another embodiment, the desired temperature of the texturing process is determined such that a portion of a crystalline fraction of the polymer blend is in a solid state in a process of the texturing (curling) of the monofilament yarn and another portion of the crystalline fraction of the polymer blend is in a molten state in the process of the texturing (curling) of the monofilament yarn.

This embodiment may be advantageous because it may provide for an optimal process temperature, wherein at least a portion of each of the polymers (or their polymorphic modifications) of the polymer blend is in a molten state. The portion of the crystalline fraction that is molten can be more than 10% (preferably 25%) by weight of the entire crystalline fraction. The portion of the crystalline fraction that remains solid can be more than 10% (preferably 25%) by weight of the entire crystalline fraction.

In another embodiment, the desired temperature of the texturing process is determined such that a crystalline fraction of one of the polymers is completely or almost completely in a solid state in a process of the texturing of the monofilament yarn and a crystalline fraction of another one of the polymers is completely or almost completely in a molten state in the process of the texturing of the monofilament yarn.

This embodiment may be advantageous because it may provide for a more robust process temperature, wherein at least one crystalline fraction of the respective polymer remains completely or almost completely in a solid state during the texturing (curling) process. Selecting the texturing process temperature as specified in this embodiment provides for an improved stability and repeatability of the texturing process, because in the texturing process the crystalline fraction of one of the polymers is completely in a solid state and the crystalline fraction of the other one of the polymers is completely in a molten state.

In another embodiment the one or more melting temperatures is two or more melting temperatures, wherein the desired temperature is determined within a temperature range or the desired temperature is determined as a range within the temperature range, wherein the temperature range has an upper boundary temperature being less or equal to one of the melting temperatures, wherein the temperature range has a lower boundary temperature being greater or equal to another one of the melting temperatures.

This embodiment may be advantageous because it may provide for a simple and straightforward definition of the optimal texturing process temperature.

In another embodiment, the upper boundary temperature is no more than a predetermined percentage larger than the lower boundary temperature in degrees Celsius, wherein the predetermined percentage is any one of the following: 5%, 10%, or 15%.

This embodiment may be advantageous because it may provide for a simple definition of the optimal process window, because only one melting temperature has to be determined using the DSC data (e.g., heat flow versus temperature curve). The only one melting temperature can be determined using the first registered peak of the curve, when the curve is measured by increasing the temperature. In addition, this embodiment may be advantageous because the heating of the monofilament yarn in the step of the texturing (curling) of the monofilament yarn may be reduced to a minimum, thereby providing for an energy-efficient process.

In another embodiment the other one of the melting temperatures is the lowest of the one or more melting temperatures. The crystalline meting temperature used in this embodiment can be used as the lower boundary temperature.

In another embodiment, each of the melting temperatures is a melting temperature of the respective polymer.

In another embodiment, the melting temperature of the respective polymer is a minimum temperature at which only a portion of a crystalline fraction of the respective polymer is in a molten state. The portion of the crystalline fraction of the polymer can be defined in a range of 10%-90% (preferably 25%-75%) by weight of a crystalline fraction of the polymer.

In another embodiment, the DSC data comprises a heat flow curve versus temperature, wherein the crystalline temperature of the respective polymer is a temperature at which a peak of a heat flow curve corresponding to a melting of a crystalline fraction of the respective polymer has its maximum.

This embodiment may be advantageous because it can provide for an effective approach for determining the melting temperatures.

In another embodiment, wherein at least one of the polymers has polymorphism, wherein some of the melting temperatures is a melting temperature of a respective polymorphic modification of the polymer having polymorphism.

In another embodiment the polymer blend comprises first portions each having the respective polymorphic modification, wherein the melting temperature of the respective polymorphic modification is a minimum temperature at which only a portion of the first portion having the respective polymorphic modification is in a molten state. The portion of the first portion can be defined in a range of 10 % -90 % (preferably 25%-75%) by weight of the first portion.

In another embodiment the DSC data comprises a heat flow curve versus temperature, wherein the crystalline temperature of the respective polymorphic modification is a temperature at which a peak of the heat flow curve corresponding to a melting of the respective polymorphic modification has its maximum.

This embodiment may be advantageous because it can provide for an effective approach for determination of the melting temperatures.

In another embodiment, the DSC data comprises a curve of a heat flow versus temperature in a temperature range, wherein the curve has a base line, wherein the curve coincides with the base line at a lower boundary temperature of the temperature range and at an upper boundary temperature of the temperature range, wherein the upper boundary temperature and the lower boundary temperature are different temperatures, wherein the determined desired temperature complies with the following constraint: a ratio of an integral value and an overall integral value is within a predefined range, wherein the integral value is equal to an integral of a difference of the curve and the base line from the lower boundary temperature to the determined desired temperature, wherein the overall integral value is equal to an integral of the difference of the curve and the base line from the lower boundary temperature to the upper boundary temperature. The predefined range can be 0.05 - 0.15, preferably 0.09-0.11.

In another embodiment at least two of the polymers are different types of polyethylene.

This embodiment may be advantageous because polyethylene may have superior properties for manufacturing of the textured yarn in comparison with other polymers. Particularly, linear polyethylene (e.g. linear low-density polyethylene (LLDPE) or and high-density polyethylene (HDPE) offers a wide range of physical material properties, covering the technical requirements of artificial turf yarn. The density of linear polyethylene can be widely modified by co-monomers.

The molecular weight distribution can be controlled with catalysts and by polymerization process management. Blending different types of polyethylene broadens the variability further. In particular, LLDPE is blended, i. e. mixed, with compatible material, such as VLDPE and/or HDPE with densities different from LLDPE. It may also be possible to blend different types of LLDPE.

Utilization of polymer blends comprising different types of polyethylene may provide for a balance between stability and softness of the textured yarn. Stability means in this context stiffness, wear resistance, hardness, resilience, etc., whereas softness means flexibility, elasticity, smoothness, etc. Blending different materials each with the required stability or softness may result in the properties providing the required balance between stability and softness.

In another embodiment the texturing device comprises a stuffer box.

This embodiment may be advantageous because it may provide for an improved quality of the textured yarn. The nozzle for hot air injection of the stuffer box can provide for advanced temperature control when the hot air has the temperature within the temperature range of the texturing process. A turbulent flow of the hot air inside the stuffer box can facilitate the process of texturing (curling).

In another embodiment the texturing device comprises a venturi nozzle.

This embodiment may be advantageous because it may provide for an improved quality of the textured yarn. The monofilament yarn passes through the venturi nozzle together with a hot air. The venturi nozzle can be configured such that the monofilament yarn is textured (curled) by the turbulent flow of the hot air in an exiting throat. Moreover the venturi nozzle can provide for substantial pressure increase in the exiting throat which can facilitate the texturing (curling) process. Injection of the hot air in the venturi nozzle can provide for an advanced process control when the injected hot air has the temperature.

In another embodiment the texturing device is an air jet texturizing machine. The air jet texturizing machine can be built as disclosed in the book "Synthetic Fibers" by Franz Fourne in chapter 4.12.4 ("Synthetic Fibers," Franz Fourne; Carl Hanser Verlag GmbH & Co, 1999, ISBN 10: 3446160728/ISBN 13: 9783446160729, p. 449-452).

In another embodiment the method further comprises raising the temperature of the monofilament yarn to a temperature within the temperature range (of the texturing process) using one or more godets.

This embodiment may be advantageous because it may provide for an improved process control, since the monofilament yarn is preheated to the temperature within the temperature range before the step of texturing (curling) of the monofilament yarn.

In another embodiment the sample for collecting the DSC data is taken from the polymer blend.

This embodiment may be advantageous because it may provide for an effective determination of the temperature range within which the texturing (curling) of the monofilament yarn is performed.

In another embodiment the sample for collecting the DSC data is a sample of the monofilament yarn.

This embodiment may be advantageous because it may provide for an effective determination of the temperature range within which the texturing (curling) of the monofilament yarn is performed. For instance, the monofilament yarns can be manufactured using different methods. Executing DSC on different samples can enable selection of an appropriate monofilament yarn.

In another embodiment the method further comprises drawing (stretching) the monofilament yarn, e.g. to a factor of 4 - 6.5.

This embodiment may be advantageous because it may provide for an increase in crystallinity of the monofilament yarn (e.g. an increase in crystallinity of at least one of the polymers of the polymer blend used for the manufacturing of the monofilament yarn). In the other words, the size of crystalline portions of the monofilament yarn (or at least one of the polymers of the polymer blend) is increased relative to the size of amorphous portions of the monofilament yarn. As a result the monofilament yarn or at least of the polymers of the polymer blend become more rigid. The stretching of the monofilament yarn can further cause reshaping of fragments (e.g. beads) of one of the polymers of the polymer blend used for the manufacturing of the monofilament yarn such that they have thread like regions, which can make impossible delamination of different polymers in the monofilament yarn from each other, in particular when immiscible polymers are used in the polymer blend. This embodiment may also be advantageous, because the drawing (stretching) process of the monofilament yarn can give rise to polymorphism, i. e. crystallographic unit cell modification. For instance the drawing process can result in forming triclinic crystal modification of polyethylene in addition to orthorhombic crystal modification of polyethylene formed after extruding and cooling.

This drawing of the monofilament yarn causes the monofilament to become longer and in the process the fragments of one of the polymers of the polymer blend (e.g. beads) are stretched and elongated. Depending upon the amount of stretching the fragments of one of the polymers (e.g. beads) of the polymer blend are elongated more.

In another embodiment the providing of the monofilament yarn comprises extruding the polymer blend into the monofilament yarn.

This embodiment may be advantageous, because it may provide for manufacturing of the monofilament yarn out of a broad spectrum of polymers including immiscible polymers.

In another embodiment the method further comprises creating the polymer blend, wherein the polymer blend is at least a three-phase system, wherein the polymer blend comprises a first polymer, a second polymer, and a compatibilizer, wherein the first polymer and the second polymer are immiscible, wherein the first polymer forms polymer beads surrounded by the compatibilizer within the second polymer.

In a specific example the first polymer could be polyamide and the second polymer could be polyethylene. Stretching the polyamide will cause an increase in the crystalline regions making the polyamide stiffer. This is also true for other semi-crystalline plastic polymers.

This embodiment may be advantageous because it may enable utilization of a broader spectrum of polymers for manufacturing of the monofilament yarn such that the properties of the artificial turf fiber can be tailored. As it is mentioned above different polymers of the polymer blend can provide for different properties of the textured yarn. One polymer can provide for the stability and/or the resilience (e.g. the ability to spring back after being stepped or pressed down), while another polymer can provide for the softness (e.g. the softer or a grass-like feel).

This embodiment may have a further advantage that the second polymer and any immiscible polymers may not delaminate from each other. The thread-like regions can be embedded within the second polymer. It is therefore impossible for them to delaminate.

A further advantage may possibly be that the thread-like regions are concentrated in a central region of the monofilament during the extrusion process. This may lead to a concentration of the more rigid material in the center of the monofilament yarn and a larger amount of softer plastic on the exterior or outer region of the monofilament yarn. This may further provide for an artificial turf fiber with more grass-like properties, when the artificial turf fiber is made of the textured (curled) monofilament yarn.

A further advantage may be that the artificial turf fibers made of the textured (curled) monofilament yarn have improved long term elasticity. This may require reduced maintenance of the artificial turf and less brushing of the fibers because they more naturally regain their shape and stand up after mechanical use.

In another embodiment the creating of the polymer blend comprises the steps of: forming a first blend by mixing the first polymer with the compatibilizer; heating the first blend; extruding the first heated blend; granulating the extruded first blend; mixing the granulated first blend with the second polymer; and heating the granulated first blend with the second polymer to form the polymer blend. This particular method of creating the polymer mixture may be advantageous because it enables very precise control over how the first polymer and compatibilizer are distributed within the second polymer. For instance the size or shape of the extruded first mixture may determine the size of the polymer beads in the polymer mixture.

This embodiment may be advantageous, because a so called single-screw extrusion method may be used. As an alternative to this, the polymer blend may also be created by putting all of the components that make it up together at once. For instance the first polymer, the second polymer and the compatibilizer could be all added together at the same time. Other ingredients such as additional polymers or other additives could also be put together at the same time. The amount of mixing of the polymer blend could then be increased for instance by using a twin-screw feed for the extrusion. In this case the desired distribution of the polymer beads can be achieved by using the proper rate or amount of mixing.

In another embodiment the polymer blend is at least a four phase system, wherein the polymer blend comprises at least a third polymer, wherein the third polymer is immiscible with the second polymer, wherein the third polymer further forms the polymer beads surrounded by the compatibilizer within the second polymer.

This embodiment may be advantageous because it may enable utilization of an even broader spectrum of polymers for manufacturing of the monofilament yarn. As it is mentioned above different polymers of the polymer blend can provide for different properties of the textured yarn. One polymer can provide for the stability, while another polymer can provide for the softness. This particular embodiment can provide for combining in a final product properties of at least three polymers.

In another embodiment the creating of the polymer blend comprises the steps of: forming a first blend by mixing the first polymer and the third polymer with the compatibilizer; heating the first blend; extruding the first heated blend; granulating the extruded first blend; mixing the first blend with the second polymer; and heating the mixed first blend with the second polymer to form the polymer blend.

This embodiment may be advantageous because it may provide for an effective procedure for manufacturing of the polymer blend comprising multiple polymers. As an alternative the first polymer could be used to make a granulate with the compatibilizer separately from making the third polymer with the same or a different compatibilizer. The granulates could then be mixed with the second polymer to make the polymer mixture. As another alternative to this the polymer mixture could be made by adding the first polymer, a second polymer, the third polymer and the compatibilizer all together at the same time and then mixing them more vigorously. For instance a two-screw feed could be used for the extruder.

In another aspect the invention provides for a textured (curled) artificial turf yarn manufactured as described above.

In another aspect the invention provides for a method of manufacturing an artificial turf carpet, wherein the method comprises: manufacturing the textured artificial yarn as described above; tufting the textured artificial turf yarn into a backing. The artificial turf backing may for instance be a textile or other flat structure which is able to have fibers tufted into it. The textured artificial turf yarn may also have properties or features which are provided for by any of the aforementioned method steps.

In another aspect the invention provides for an artificial turf carpet manufactured according to the method for manufacturing of the artificial turf according to the aforementioned embodiment.

**Brief description of the drawings**

In the following embodiments of the invention are explained in greater detail, by way of example only, making reference to the drawings in which:

Fig. 1 illustrates an example of a system for manufacturing of a textured (curled) monofilament yarn;
Fig. 2 illustrates an example drawing device;
Fig. 3 illustrates an example cross-section of a monofilament yarn;
Fig. 4 illustrates an example cross-section of a monofilament yarn;
Fig. 5 illustrates an example texturing (curling) device;
Fig. 6 illustrates an example stuffer box;
Fig. 7 illustrates an example venturi nozzle;
Fig. 8 illustrates an example DSC curve;
Fig. 9 illustrates an example DSC curve;
Fig. 10 illustrates an example DSC curve;
Fig. 11 shows a flow chart of a method;
Fig. 12 shows a flow chart of a method;
Fig. 13 shows a flow chart of a method;
Fig. 14 shows a flow chart of a method;
Fig. 15 shows a diagram which illustrates a cross-section of a polymer blend;
Fig. 16 shows a diagram which illustrates a cross-section of a polymer blend;
Fig. 17 shows an example of a cross-section of an example of artificial turf.

**Detailed Description**

Like numbered elements in these figures are either equivalent elements or perform the same function. Elements which have been discussed previously will not necessarily be discussed in later figures if the function is equivalent.

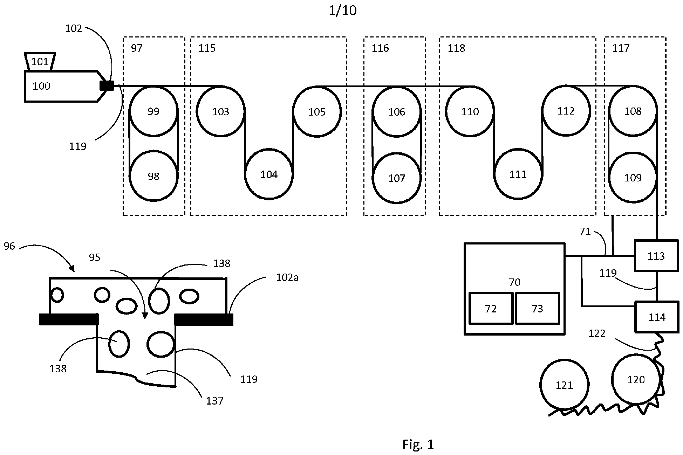

Fig. 1 illustrates an example system of manufacturing of a textured (curled) monofilament yarn 122. The system comprises: an extruder 100 (e.g. a screw-extruder) and a filament texturing (curling) device. The system can further comprise one or more drawing devices 115, 118, one or more thermosetting (or heating) devices (e.g. godets, ovens) 117, one or more cooling devices (e.g. godets, bathes with cooling liquid) 116, 120, 97, and one or more rollers 121.

The extruder 100 comprises at least one hopper 101 for feeding components of a monofilament yarn (e.g. a blend of polymers) into the extruder and one outlet 102 for the monofilament yarn. The outlet 102 can be implemented as a wide slot nozzle or a spinneret. A polymer melt formed in a chamber of the extruder is pressed through the outlet 102 to form a monofilament yarn of a specific shape. A fragment of the wide slot nozzle or the spinneret is depicted in Fig. 1.

Fig. 1 illustrates the extrusion of the polymer mixture into a monofilament. Shown is an amount of polymer blend 96. Within the polymer blend 96 there is a large number of portions 138 of a first polymer of the polymer blend 96 being at least partially embedded in a second polymer 137 of the polymer blend 96. A screw, piston or other device of the extruder 100 is used to force the polymer mixture 96 through a hole 95 in a plate 102a. This causes the polymer blend 96 to be extruded into a monofilament yarn 119. The monofilament yarn 119 is shown as containing fragments 138 of the first polymer of the polymer blend 96 also. The both of the polymers of are extruded together.

In some examples the polymer blend can have different compositions. Within the polymer blend 96 there is a large number of polymer beads 138. The polymer beads 138 may be made of one or more polymers that is not miscible with the second polymer 137 and is also separated from the second polymer 137 by a compatibilizer. A screw, piston or other device is used to force the polymer blend 96 through a hole 95 in a plate 102a. This causes the polymer blend 96 to be extruded into a monofilament yarn 119. The monofilament yarn 119 is shown as containing polymer beads 138 also. The second polymer 137 and the polymer beads 138 are extruded together. In some examples the second polymer 137 will be less viscous than the polymer beads 138 and the polymer beads 408 will tend to concentrate in the center of the monofilament yarn 119. This may lead to desirable properties for the final artificial turf fiber as this may lead to a concentration of the thread-like regions in the core region of the monofilament yarn 119.

The monofilament yarn can be cooled down after the extrusion using the cooling device 97. When the cooling device is implemented as a godet, it can comprise two rollers 99 and 98 for winding the monofilament yarn 119. The cooling process can be implementing by maintaining a temperature of the rollers 99 and 98 within the specified range and/or by air cooling and/or by water cooling. A temperature of water (or air) can be kept within a specified range as well. Alternatively the cooling device can be a bath with a cooling liquid (e.g. water) in which the monofilament yarn is cooled. The monofilament yarn is cooled down using the cooling device 97 to a temperature where crystallization can take place. In the crystallization process the crystallites are forming to a percentage, which depends on the cooling rate. The higher the cooling rate, the less is the crystallinity and vice versa.

The monofilament yarn can be further drawn using the drawing device 115. The drawing device can comprise three rollers 104, 103, 105. The drawing ratio is defined as the ratio of linear speeds of a pair of rollers 103 and 104 (or 104 and 105). The drawing device 115 can be operable for heating the monofilament yarn 119 during or before the drawing process. This can be implemented by heating one or more the rollers in order to keep their temperature within a predetermined temperature range and/or by air heating, wherein the hot air has a temperature within a predetermined temperature range. The elongation of the monofilament yarn in the drawing device can force the macromolecules of the monofilament yarn to parallelize. This results in a higher degree of crystallinity and increased tensile strength, compared with undrawn monofilament yarn.

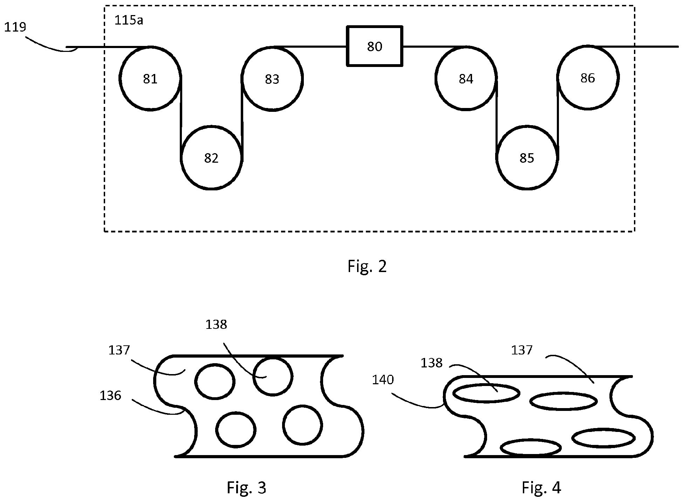

Fig. 2 depicts an alternative implementation 115a of any of the drawing devices mentioned herein (e.g. the drawing device 115 or 118). The drawing device comprises one or more feeding rollers 81 - 83, an oven 80, and one or more receiving rollers 84-86. The one or more feeding rollers are configured to feed the monofilament yarn 119 into the oven. The one or more receiving rollers are configured to receive the monofilament yarn from the oven. The oven is configured to heat the monofilament yarn. The drawing ratio is determined by a ratio of the linear speeds of the feeding roller 83 being the last roller before the oven and the receiving roller 84 being the first after oven. The thermosetting process (drawing process) is performed in the oven 80, in which the monofilament yarn in stretched and heated simultaneously.

Fig. 3 depicts a not to scale cross-section of a segment the monofilament yarn 136 before its processing in the drawing device 115, whereas Fig. 4 depicts a not to scale cross-section of a segment of the monofilament yarn 140 after its processing in the drawing device 115. Before the drawing process the fragments of the first polymer 138 can have an arbitrary shape, e.g. a shape of beads. The fragments of the first polymer are at least partially incorporated in the second polymer 137. After the drawing process the fragments of the first polymer 138 have elongated shape in comparison to the fragments of the first polymer 128 before the drawing process.

The monofilament yarn can be further cooled using the cooling device 116. The cooling device, when implemented as a cooling godet can have rollers 106 and 107. The cooling device can be built and/or function in the same way as the cooling device 97. Afterwards the monofilament yarn can be further drawn using the drawing device 118 having rollers 110, 111, and 112. The drawing device 118 can be built and/or function in the same way as the drawing device 115.

The monofilament yarn can be further heated using one or more heating devices 117. The heating device 117, when implemented as a godet, comprises a pair of rollers 108 and 109. The heating of the monofilament yarn can be made by keeping a temperature of the rollers within a predetermined temperature range and/or by hot air having a temperature within a predetermined temperature range. A temperature sensor 113 positioned in-between the heating godet 117 and the texturing (curling) device 114 can be used as a feedback temperature sensor for providing feedback to the heating godet 117 in order to provide a temperature of the monofilament yarn within a temperature range required for the texturing (curling) process. The temperature sensor 113 can be configured to measure the temperature of the monofilament yarn by registering infrared radiation of the monofilament yarn.

A controller 70 is configured to control a process temperature of the texturing process in the texturing device 114. The controller 70 comprises a computer processor 72 and memory 73 comprising instructions executable by the computer processor. The controller is communicatively coupled to the texturing device 114, the temperature sensor 113, and the heating device 117. The communicative coupling can be implemented via a computer network 71. The controller is operable to hold an actual temperature of a texturing process in the texturing device at a desired temperature which is required for the texturing process. The desired temperature can be specified as a temperature range. In this case the holding of the actual temperature at the desired temperature comprises keeping the actual temperature within the specified range, in particular the actual temperature is kept as close as possible to a middle temperature of the temperature range. The middle temperature is equal to an average of a lower boundary of the temperature range and an upper boundary of the chosen temperature range. The temperature of the texturing process can be determined by at least one of the following factors: a temperature of the monofilament yarn, a temperature in a texturing device component, in which the texturing process takes place, and a temperature of a texturing device component, which is in physical contact with the monofilament yarn in the texturing process. The execution of the computer instructions by the computer processor 72 causes the controller to hold the process temperature at the desired temperature. The control of the process temperature can be implemented as follows. The controller reads out the temperature of the monofilament yarn registered by the temperature sensor 113. The temperature of the monofilament yarn is used as a feedback signal for setting the temperature of the heating device 117 in order to provide the heating of the monofilament yarn to the desired temperature.

The functioning of this feedback loop can be implemented using a proportional-integral-derivative algorithm. In addition the controller can provide temperature setting signals to the texturing device and/or other devices operable for changing the temperature of the texturing process. This can be implemented in the same way as the aforementioned feedback loop, i.e. by reading one or more temperature values registered by one or more temperature sensors of the texturing device and providing the feedback signal to the texturing device and/or the other device for holding a temperature in the texturing device at the desired temperature. The feedback signal can be provided to the texturing device and/or any other device operable for changing a temperature of the texturing process. The functioning of this feedback loop can be implemented using the proportional-integral-derivative algorithm as well. The controller can be configured to operate the aforementioned feedback loops independently on in conjunction with each other.

After the heating using one or more heating devices 117 the monofilament yarn is textured (curled) in the texturing (curling) device 114. The textured (curled) monofilament yarn 122 is cooled using a cooling godet 120. The cooling can be performed by keeping a temperature of a roller 120 of the cooling godet within a predetermined temperature range and/or by air having a temperature within a predetermined temperature range. The textured monofilament yarn 122 can be forwarded further to another roller 121 for further processing.

The sequence of optional processing units, i.e. the cooling godet 97, the drawing device 115, the cooling godet 116, the drawing device 118, the heating godet 117, can be different. It depends on particular processing steps required for preprocessing steps before the texturing (curling) process. Additional drawing devices, and/or heating devices, and/or cooling devices can be included. For instance several heating devices can be used instead of the single heating device 117 depicted in Fig. 1 in order to provide for a gradual heating of the monofilament yarn 119. Alternatively, the preprocessed monofilament yarn can be used for the texturing (curling). In this case there can be no need of the extruder 100, the cooling devices 97 and 116, and the drawing device 115. When drawing process can be executed in several steps, several drawing devices 115 can be used in series.

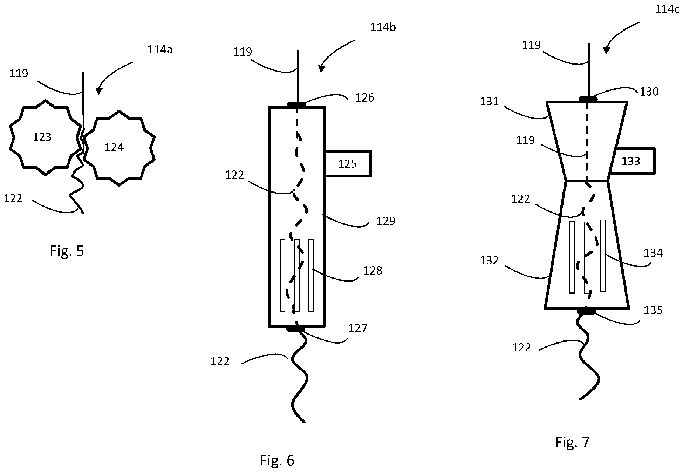

Fig. 5 depicts an example of a texturing (curling) device 114a. The device 114a comprises a pair of toothed wheels 123 and 124 configured to press the monofilament yarn 119 in-between the toothed wheels such that profile of the toothed wheels is imprinted in the monofilament yarn 119 in order to cause its texturing (curling). The tooth profile the toothed wheels can have triangular shape depicted in Fig. 5 or smooth. Alternatively it can be a smooth wave like profile. The device 114a can have more than one pair of the toothed wheels, wherein the monofilament yarn is processed sequentially by the pairs of wheels. The temperature control of the texturing process can be implemented by one or more of the following: controlling, as described above, the temperature of the monofilament yarn entering the texturing device (e.g. using the controller 70, temperature sensor 113, and the heating device 117); controlling a temperature of the toothed wheels (e.g. by using the controller 70, which can be configured to read out temperature of one or more temperature sensors operable for registering the temperature of the toothed wheels and sending a feedback signal to one or more heaters operable for heating the toothed wheels)..

Fig. 6 depicts another example of a texturing (curling) device 114b. The device 114b is a stuffer box. The stuffer box comprises a hollow chamber 129 having an inlet 126 for the monofilament yarn 119 and an outlet 127 for the textured monofilament yarn 122. The hollow chamber can have a conical shape, wherein a diameter of the hollow chamber near the inlet 126 is smaller than the diameter of the hollow chamber near the outlet 127. The inlet 119 and the outlet 127 can be positioned at the opposite sides of the hollow chamber 129. An air inlet nozzle 125 for injecting air into the hollow chamber 129 is attached to an upper portion of the hollow chamber 129, i.e. in the proximity of the inlet 126. The lower portion of the hollow chamber 129 comprises slits 128 for air exhaust, i.e. the slits are located in the proximity of the outlet 127. The air inlet nozzle 125 and the slits 128 are configured to provide a turbulent flow of the air inside the hollow chamber 129. The turbulent air flow causes tension of the monofilament yarn during the texturing (curling) process. The temperature of the texturing process and the turbulent flow are configured to cause texturing (curling) of the monofilament yarn 119. The temperature control of the texturing process performed by the device 114b can be implemented by one or more of the following: controlling, as described above, the temperature of the monofilament yarn entering the texturing device (e.g. using the controller 70, temperature sensor 113, and the heating device 117); controlling the temperature of air, which is injected into the air inlet nozzle 125. The controller 70 can be configured to maintain the air temperature at the desired temperature by reading out temperature of one or more temperature sensors operable for registering a temperature of the hot air and sending a feedback signal to one or more heaters operable for heating the air.

Fig. 7 depicts another example of a texturing (curling) device 114c. The device 114c is a venturi nozzle. The venturi nozzle comprises an entrance throat 131 and an exiting throat 132. An inlet 130 for the monofilament yarn 119 is mounted on a first end of the entrance throat. An outlet 135 for the textured (curled) monofilament yarn is mounted on a first end of the exiting throat 132. A second end of the entrance throat is attached to a second end of the exiting throat. An area of a cross-section of the first end of the entrance throat is bigger than an area of a cross-section of the second end of the entrance throat. An area of a cross-section of the first end of the exiting throat is bigger than an area of a cross-section of the second end of the exiting throat. The entrance throat 131 can have an air inlet. Alternatively the inlet 119 can be configured not only for passing the monofilament yarn into the venturi nozzle, but for injecting air as well. The exiting throat 132 has slits 134 for air exhaust. The venturi nozzle is configured such that the air injected into the entrance throat via inlet port 130 or air inlet 133 flows into the exiting throat 132, wherein the air flow is turbulent in the exiting throat. The turbulent air flow causes tension of the monofilament yarn during the texturing (curling) process. In addition, the airflow from the entrance throat into the exiting throat causes substantial pressure increase in the upper portion of the exiting throat, i.e. in the portion located between the slits 124 and the second end of the exiting throat. The slits 134 can facilitate the turbulent flow of the air in the upper portion of the exiting throat and/or the pressure increase. The temperature control of the texturing process performed by the device 114c can be implemented by one or more of the following: controlling, as described above, the temperature of the monofilament yarn entering the texturing device (e.g. using the controller 70, temperature sensor 113, and the heating device 117); controlling the temperature of air, which is injected into the air inlet 133 and/or air inlet port 130. The controller 70 can be configured to maintain the air temperature at the desired temperature by reading out temperature of one or more temperature sensors operable for registering a temperature of the hot air and sending a feedback signal to one or more heaters operable for heating the air. At least one of the following factors causes/facilitates the texturing (curling) of the monofilament yarn: the air temperature, the turbulent air flow, and the pressure drop.

The textured (curled) monofilament yarn, which can be used as the artificial turf fibers can be prepared from a polymer blend comprising at least two polymers. The polymer blend can be a more complex mixture. The polymer blend can be at least a three phase system. It can comprise a first polymer, a second polymer, and a compatibilizer. These components form a three-phase system. The first and a second polymer are immiscible. If there are additional polymers or compatibilizers are used in the polymer blend, then the three phase system may be increased to a four, five or more phase system. The first polymer could be polyamide and the second polymer could be polyethylene. The polymer blend can comprise a polar polymer and a non-polar polymer. The polymer blend can comprise at least one of the following: polyethylene terephthalate, which is also commonly abbreviated as PET, polybutylene terephthalate, which is also commonly abbreviated as PBT, polyethylene, polypropylene.

The compatibilizer can be any one of the following: a maleic acid grafted on polyethylene or polyamide; a maleic anhydride grafted on free radical initiated graft copolymer of polyethylene, SEBS, EVA, EPD, or polyproplene with an unsaturated acid or its anhydride such as maleic acid, glycidyl methacrylate, ricinoloxazoline maleinate; a graft copolymer of SEBS with glycidyl methacrylate, a graft copolymer of EVA with mercaptoacetic acid and maleic anhydride; a graft copolymer of EPDM with maleic anhydride; a graft copolymer of polypropylene with maleic anhydride; a polyolefin-graft-polyamide; and a polyacrylic acid type compatibilizer.

For instance, the textured (curled) monofilament yarn, which can be used as the artificial turf fibers can be prepared from polyethylene based polymers. Different polyethylene (type) based polymers are blended such that a desired property profile is created. The main focus hereby lies on the crimp properties of the monofilament yarn.

The polymer blend can comprise LLDPE and HDPE. LLDPE is a copolymer of ethylene and $\alpha$-olefin or 1-olefin. Several 1-olefins can be copolymerized together with ethylene, but most of the commercially available LLDPEs are copolymers with 1-butene, 1-hexene or 1-octene, or mixtures thereof, as co-monomers. In a polymerization process, both the monomer ethylene and the co-monomer 1-olefin are incorporated step-by-step into a growing macromolecular chain. In each single step either an ethylene molecule or a 1-olefin molecule is added to the chain.

The sequence of ethylene and 1-olefin units along the chain is determined by both, the polymerization catalysts and the details of the reaction layout, such as pressure, temperature, etc. In general, there are two distinctive types of catalysts; multi-site catalysts and single-site catalysts. The type of catalyst controls the polymerization progress and the way in which monomers and co-monomers are added to the polymer chain. Polymers are always entities of macromolecules with different chain length, distributed around an average value. Polymers are thus characterized by a molecular weight distribution. Different average values can be defined depending on statistical methods. In practice two averages are used, denoted as $M_n$ and $M_W$. $M_n$ is the number average of the molecular weight distribution, mathematically expressed by

$$M_n = \Sigma\, n_i\, M_i\, /\, \Sigma n_i$$

MW is the weight average of the molecular weight distribution and is related to the fact that heavier molecules contribute more to the arithmetic average than the lighter ones. This is mathematically expressed by

$$M_W = \Sigma\, n_i\, M_i^2\, /\, \Sigma\, n_i\, M_i$$

The polydispersity index PDI is the ratio of $M_W / M_n$ and indicates the broadness of the distribution. In general, polymers prepared with multi-site catalysts have a greater PDI than those prepared with single-site catalysts.

Moreover, the chemical composition of the macromolecules depends on the type of catalyst. As mentioned above, every 1-olefin or $\alpha$-olefin can act as a co-monomer in the polymerization process, but typically only 1-butene, 1-hexene and 1-octene is in use for copolymerization of LLDPE. As these molecules carry a double bond between two carbon atoms, it is possible to insert them instead of an ethylene molecule into the growing chain of the macromolecule which forms in the polymerization process. The incorporation of a 1-olefin molecule into the polymer main chain leaves, other than ethylene does, a side chain on the main chain. 1-butene, for instance, includes 4 carbon atoms and generates an ethyl side chain, whereas two carbon atoms (the two with the double bond between carbon atoms 1 and 2) are incorporated into the main chain and another two carbon atoms extent outwardly of that main chain as a side chain. In case of 1-hexene the length of the side chain is 4 carbon atoms and it is 6 with 1-octene. Concerning the side chain distribution, the molecular architecture may greatly be influenced by the choice of the catalyst used in the polymerization process. Multi-site catalysts, also referred to as Ziegler or Ziegler-Natta catalysts or Phillips catalysts, yield in heterogeneously branched polymers, whereas single-site catalysts, also referred to as metallocene catalysts, yield in homogeneously branched polymers. In heterogeneously branched macromolecules the distance from one branching point to another branching point is broadly distributed along the polymer main chain. The other way round, the branches are more evenly spaced in homogeneous branched LLDPEs. It has also been observed that with Ziegler catalysts the co-monomers are preferably incorporated into the short length main chains, while the longer main chains deplete of co-monomers. Depending on the design of the polymerization process the side chain branching is heterogeneous or homogeneous.

The use of multi-site catalysts results in polymers with relatively broad molecular weight distributions compared with single-site catalysts. Moreover, the molecular weight distribution can be influenced by using a cascaded reactor layout, leading to polymers with multimodal molecular weight distributions. Blending different types of polyethylene in situ, i. e. inside the polymerization reactor, or ex situ, i. e. after polymerization, broadens the variety further.

Number, length and distribution of the side chains in PE macromolecules greatly influence the properties and the processability. According to applicant's experience, it is advantageous to use LLDPE with a broad distribution of side chains, typical for Ziegler-catalyzed, solution polymerized polymers for turf fiber production, in particular for texturized turf fiber production. The fraction of short length polymer chains with high branching makes the fibers, produced of these LLDPE-types, easy to texturize. In the course of the texturizing process the fibers need to be softened under the influence of heat and then deformed, such that a wanted crimped shape results and stays on the fibers. It has turned out that the above mentioned LLDPE-types are appropriate for this process.

Preferably, in the texturizing (curling) process a certain fraction of the polymeric filament (i.e. monofilament yarn) must be in a molten state, i. e. the small crystallites of the structure have lost their ordered state, whereas another fraction has not. This means, that the filaments ought to be stable enough not to adhere or lump and deformable enough to crimp under the impact of heat and mechanical deformation. Once the deformation is achieved, the filaments are quenched giving rise to crystallization of the small crystallites. Thereby the texturizing stays in the filaments.

Texturizing is supported by both, the chemical structure of the polymeric filaments and the temperature of the filaments at the moment of deformation. Both can be appraised by knowledge of the melting behavior of the polymeric filaments. The melting behavior manifests in a characteristic melting graph detected by DSC. In a characteristic melting graph, measured by DSC, the variation of the melt enthalpy (heat flow) over time, i. e. dH/dt is plotted against the variation in temperature over time, i. e. dT/dt. The melt enthalpy $\Delta$H or heat of fusion can be calculated by mathematical integration, i. e. the determination of the area between the baseline and the complete curve or parts thereof. This reflects the amount of heat necessary to completely or partially melt the sample.

Polymers herein are generally of the type of partially crystalline substances. Partially crystalline polymers are characterized in that a part thereof is solid crystals, while the rest is amorphous. The amorphous part behaves as a highly viscous liquid. Liquid parts of a polymer sample do not contribute to the melting process. The melting curve as detected by DSC reflects the melting behavior of the crystallites.

Number and size of the crystallites determine the density of polymers. LLDPE has a lower density compared with HDPE. Combining LLDPE and HDPE into a blend may have the advantage to broaden the melting curve. The melting curves of LLDPE are quite specifiable, depending on what type of LLDPE is regarded. As already mentioned, the co-monomer, the catalyst and the type of process layout have a great influence on the appearance of the melting curve. There are three types of processes for the preparation of LLDPE: slurry, solution and gas-phase. The slurry-process is underrepresented in this context, as very few LLDPE-types exist. But, it is the method of choice of the production of HDPE. LLDPE from solution processes is characterized in that mostly 1-octene acts as co-monomer in that process. Contrariwise 1-hexene and 1-butene are the co-monomers used in gas-phase processes.

The composition of an example polymeric blend used for manufacturing of the textured (curled) monofilament yarn comprises:

(A) 10 % by weight of the total composition to 95 % by weight of the total composition of at least one LLDPE having

- a density of 915 to 920 grams per liter,

- a melt index ($I_2$) from 1 to 10 grams per 10 minutes,
- a polydispersity $M_W/M_n$ in a range of 3 - 5, in particular,
- 1-olefin comonomers, the comonomers being 1-butene, 1-hexene or 1-octene or compositions thereof,
- a heterogeneously or homogeneously side branching distribution,
- a melting graph as measured by DSC with one, two or three maxima in the temperature range between 30 °C and 150 °C, wherein the number of maxima is determined by a number of polymorphic modifications of the LLDPE used in this example polymeric blend, the maxima can be isothermal, overlapping, or co-located; and

(B) 10 % by weight of the total composition to 30 % by weight of the total composition of at least one HDPE having

- a density of 935 to 960 grams per liter,
- a melt index ($I_2$) from 1 to 10 grams per 10 minutes,
- a polydispersity index $M_W/M_n$ in a range of 3 - 6, in particular,
- 1-olefin comonomers, the comonomers being 1-butene, 1-hexene or 1-octene or compositions thereof,
- a heterogeneously side branching distribution,
- a melting graph as measured by DSC with one maximum in the temperature range between 30 °C and 150 °C.

The polymeric blends used for the manufacturing of the (texturized) filaments are characterized by a melting graph measured by DSC. The DSC method is widely used for thermal analysis. The method offers a fast and easy determination of phase transitions, e. g. melting, glass transition, and crystallization of polymer samples.

In a DSC analysis the energy is measured as a heat flow into or out of the sample. The vertical axis of a DSC plot is given in units of mW or mJ/s, whereas the horizontal axis shows the temperature in °C. In a DSC run the sample is placed in a small metal pan and the measured against an empty metal pan. The temperature is raised (or lowered) at a constant rate dT/dt, mostly 10 °C/min or 20 °C/min and the pans are heated separately. When a phase transition occurs in the sample the uptake of energy (or the release of energy) is compensated by the furnace under the sample pan as long as necessary to maintain the heating (or cooling) rate and recorded as the energy flow. As the experiment is always done under constant pressure the energy flow is represented by a change in enthalpy $\Delta$H. Then dH/dt equals $C_p$ dT/dt, wherein $C_p$ is the heat capacity of the sample.

The enthalpy of the complete melting process $\Delta$H can be calculated by mathematical integration of the DSC trace, i. e. $\Delta H = \int (dH) \, dT$. Therefor a baseline (which is not plotted automatically throughout a DSC run) is needed. This baseline has to be interpolated as flat baseline, when the DSC curve follows the same progression in the segments of the curve before and after the phase transition. However this is often not the case, because $C_p$ may not be the same before and after the phase transition, moreover $C_p$ can depend on temperature. In cases, where a step in $C_p$ is present, an interpolation using sigmoid function is suitable for the construction of the baseline. The interpolation reflects the extent of progress of the transition. At each point of the interpolated baseline, i. e. each temperature in the region of the peak, difference in $C_p$ is calculated by linear extrapolation of the left pre-transition side and the right post-transition side of the curve and then weighted by the extent of progress of the transition. Besides interpolation using sigmoid function interpolation using other functions like cubic of step functions can be used.

Once the baseline has been constructed, a left and a right limit for the integral must be defined, which gives rise to another discussion. When analyzing LLDPE with the DSC-method, the left limit is often hard to find in the temperature range between ambient and end of melting. This is because LLDPE may be partly melted at ambient temperatures. A cooling device and a purge gas device are necessary to extend the range to temperatures lower than ambient.

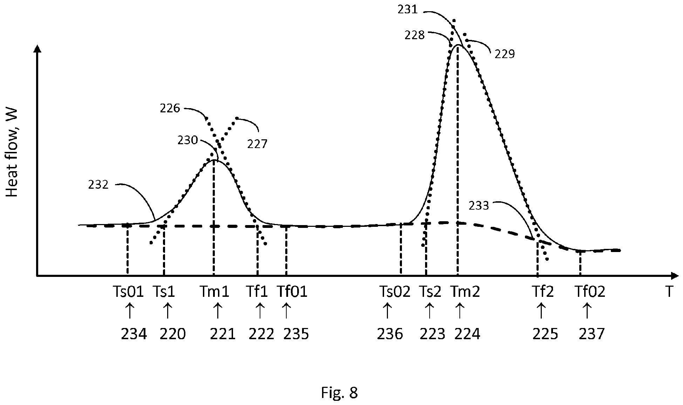

An example DSC graph is depicted in Fig. 8. The DSC graph represents schematically an example curve 232 of a heat flow (W) versus temperature. A peak 230 of the curve 232 corresponds to a melting of a one polymer of the blend (e.g. polymer 138). This polymer is called further in the description related to this figure as the first polymer. A peak 231 of the curve 232 corresponds to a melting of another polymer of the blend (e.g. polymer 137). This polymer is called further in the description related to this figure as the second polymer. The first and the second polymers do not have polymorphism. The curve 232 has the following characteristic temperatures: Ts01 (234), Ts1 (220), Tm1 (221), Tf1 (222,) Tf01 (235), Ts02 (236), Ts2 (223), Tm2 (224), Tf2 (225), Tf02 (237).

Each peak of the curve 232 has the following characteristic temperatures:

a) Ts01 (Ts02) is a temperature at which the curve 233 starts to deviate from the base line 233. This temperature characterizes the beginning of the melting process.;

b) Ts1 (Ts2) is a temperature characterizing substantial beginning of the melting process. At this temperature a substantial portion of the crystalline fraction of the first (second) polymer is molten. As usual this temperature is called a lower boundary of a melting range of a melting process or a melting point. The temperature Ts1 (Ts2) is a temperature at which the tangent line 227 (228) intersects the base line 233. The tangent line 227 (228) is a tangent to a left slope of the peak 230 (231). The tangent line has the same first derivative as the left slope of the peak at a temperature at which the left slope of the peak 230 (231) has its second derivative equal to zero;

c) Tm1 (Tm2) is a temperature at which the peak 230 (231) has its maximum. This temperature (as usual) indicates the temperature at which the melting process has the highest rate;

d) Tf1 (Tf2) is a temperature characterizing substantial ending of the melting process. At this temperature the crystalline fraction of the first (second) polymer is almost completely molten. As usual this temperature is called an upper boundary of the melting range of the melting process. The temperature Tf1 (Tf2) is a temperature at which the tangent line 226 (229) intersects the base line 233. The tangent line 226 (229) is a tangent to a right slope of the peak 230 (231). The tangent line has the same first derivative as the right slope of the peak at a temperature at which the right slope of the peak 230 (231) has its second derivative equal to zero;

e) Tf01 (Tf02) is a temperature at which the curve 233 starts to coincide with the base line 233. This temperature characterizes the complete end of the melting process. At this temperature the crystalline fraction of the first (second) polymer is completely molten.

The dashed line 233 is a base line of the DSC curve. The base line of the peak 230 is straight, because the melting of the crystalline fraction of the first polymer does not result in a change in the heat capacity (Cp) of the first polymer and as a result thereof in the change of the heat capacity of the polymer blend. The base line of the peak 231 is a sigmoidal baseline because the melting of the crystalline fraction of the second polymer results in a change in the specific heat capacity of the second polymer and as a result thereof in the specific heat capacity of the polymer blend. The sigmoidal base line can be any suitable sigmoidal function.

The parameters used for determination of a process window of texturing (curling) of the monofilament yarn can be derived using the following definitions and/or procedures.

First the DSC curve can be preprocessed. The contribution of the base line can be subtracted from the original DSC curve. In other words each value of the preprocessed DSC curve at a particular temperature is equal to a value of the original DSC curve at said temperature minus a value of the baseline curve at said temperature. For further steps, either the original or the preprocessed DSC curve can be used. In case when peaks of the DSC curve overlap, a deconvolution of the overlapping peaks can be performed in order to provide processing of each of the overlapping peaks in an independent way. Afterwards the temperatures specified in sections a) - e) are determined.

The lower (upper) boundary value of the temperature range for the texturing (curling) process can be one of the following temperatures: Ts01, Ts1, Tm1, Tf1, Tf01, Ts02, and Ts2 (Ts1, Tm1, Tf1, Tf01, Ts02, Ts2, Tm2), wherein the lower boundary value is less than the upper boundary value. For instance, the temperature range Tf01 - Ts02 can be selected when it is required that the crystalline fraction of the first polymer is completely molten and the crystalline fraction of the second polymer is completely in the solid state in the process of the texturing (curling) of the monofilament yarn. Alternatively, the temperature range Tf01 - Tm2 can be selected, when it is required that the crystalline fraction of the first polymer is completely molten and the crystalline fraction of the second polymer is partially molten in the process of the texturing (curling) of the monofilament yarn. As yet another alternative, the temperature range Tm1 - Tf1 can be selected, when it is required that the crystalline fraction of the first polymer is partially molten and the crystalline fraction of the second polymer is completely in the solid state in the process of the texturing (curling) of the monofilament yarn. As yet another alternative Tm1 can be taken as a reference temperature $T_R$ for the texturing (curling) process. Since the temperature of the filaments should not fall below the reference temperature $T_R$ during the course of texturizing the filaments, a lower boundary and an upper boundary of the temperature range can be defined as follows: the lower boundary is equal to $T_R$ and the upper boundary is equal to a surplus temperature $T_S$, wherein the surplus temperature $T_S$ being no more than a predetermined percentage larger than the lower boundary temperature in degrees Celsius, wherein the predetermined percentage is 15 %, preferably 10%, and more preferably 5%.

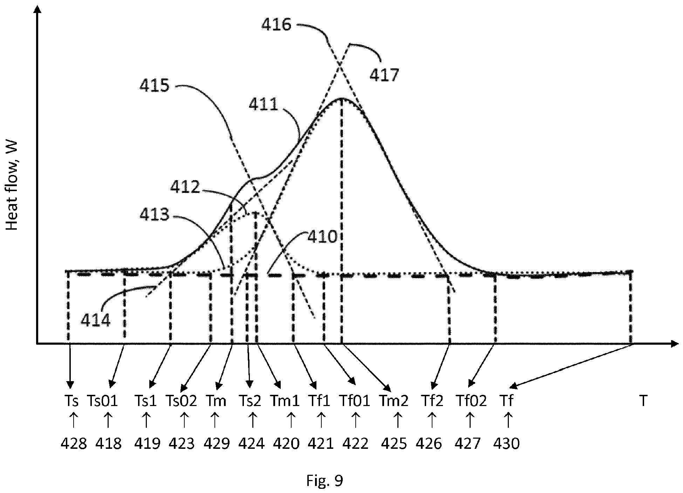

Another example DSC graph is depicted in Fig. 9. The DSC graph represents schematically an example curve 411 of a heat flow (W) versus temperature. The DSC curve is a cooling or heating curve of a polymer blend comprising two different polymers each having no polymorphism. In this example the melting temperatures of the polymers of the blend are close to each other. As a result thereof the curve 411 has only one maximum at Tm2 temperature 425. Merely for illustrative purposes a base line 410 of the curve 411 is flat (a horizontal line). Alternatively the curve 411 can be a preprocessed curve having contribution of the non-flat base line (e.g. the base line 233 in Fig. 8) subtracted from the original DSC curve.

Being not bound to the example curve depicted in Fig. 9 the overlapping peaks constituting an integral DSC curve can be extracted using a deconvolution procedure. The deconvolution can be performed for instance using the Stokes method with Gaussian smoothing, the method based on decomposition of a DSC curve into a Fourier series, or the method based on the decomposition of a DSC curve into a linear combination of instrumental functions. After extraction of the overlapping peaks each of them can be processed as described above.

Deconvolution of the curve 411 results in the generation of two curves 412 and 413 each representing a respective peak. One curve (e.g. 412) is a characteristic of a melting process of one of the polymers of the blend, while the other curve (e.g. 413) is a characteristic of a melting process of the other polymer of the blend. As clearly seen from Fig. 9 the peaks represented by the curves 412 and 413 overlap. The curves 412 and 413 can be further processed in the same way as described above. Processing of the curve 412 results in determination of the following parameters: Ts01 temperature 418 having the same physical meaning as the Ts01 temperature 234 or the Ts02 temperature 236 in Fig. 8; Ts1 temperature 419 having the same physical meaning as the Ts1 temperature 220 or the Ts2 temperature 223 in Fig. 8, wherein Ts1 temperature 419 is determined using a tangent line 414 in the same way as Ts1 temperature 220 is determined using the tangent line 227; Tm1 temperature 420 having the same physical meaning as the Tm1 temperature 221 or the Tm2 temperature 224 in Fig. 8; Tf1 temperature 421 having the same physical meaning as the Tf1 temperature 222 or the Tf2 temperature 225 in Fig. 8, wherein the Tf1 temperature 421 is determined using the tangent line 415 in the same way as Tf1 temperature 222 is determined the tangent line 226; Tf01 temperature 422 having the same physical meaning as the Tf01 235 temperature or the Tf02 237 temperature in Fig. 8. Processing of the curve 413 results in determination of the following parameters: Ts02 temperature 423 having the same physical meaning as the Ts01 temperature 234 or the Ts02 temperature 236 in Fig. 8; Ts2 temperature 424 having the same physical meaning as the Ts1 temperature 220 or the Ts2 temperature 223 in Fig. 8, wherein Ts2 temperature 419 is determined using a tangent line 416 in the same way as Ts1 temperature 220 is determined using the tangent line 227; Tm2 temperature 425 having the same physical meaning as the Tm1 temperature 221 or the Tm2 temperature 224 in Fig. 8; Tf2 temperature 426 having the same physical meaning as the Tf1 temperature 222 or the Tf2 temperature 225 in Fig. 8, wherein the Tf2 temperature 426 is determined using the tangent line 416 in the same way as Tf1 temperature 222 is determined the tangent line 226; Tf01 temperature 427 having the same physical meaning as the Tf01 temperature 235 or the Tf02 temperature 237 in Fig. 8.

The lower (upper) boundary value of the temperature range for the texturing (curling) process can be selected in the same way as described above.

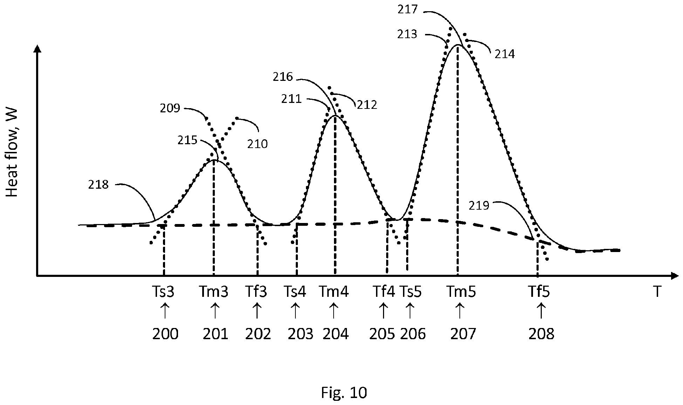

Another example DSC graph is depicted in Fig. 10. The DSC graph represents schematically a curve 218 of a heat flow (W) versus temperature. In contrast to polymer blend which DSC curve depicted in Fig. 8, one polymer of a polymer blend has two polymorphic modifications and another one polymer of a polymer blend does not have polymorphism. The polymer having polymorphism is called further as the third polymer in the description of Fig. 10. The polymer having no polymorphism is called further as the fourth polymer in the description of Fig. 10. Peak 215 corresponds to a melting of one of the polymorphic modifications of the third polymer. Peak 216 corresponds to a melting of another one of the polymorphic modifications of the third polymer. Peak 217 corresponds to a melting of a crystalline fraction of the fourth polymer. The base line curve 219 is defined in the same way as described above. Tm3 (201), Tm4 (204), and Tm5 (207) are defined as specified above in section c). Ts3 (200), Ts4 (203), Ts5 (206) are defined using tangent lines 210, 211, and 213 as specified above in section b). Tf3 (202), Tf4 (205), Tf5 (208) are defined using tangent lines 209, 212, and 214 as specified above in section d). The temperatures equivalent to Ts01 and Tf01 are defined as specified above in points a) and e). These temperatures are not depicted in Fig. 10 merely for illustrative purposes. Ts5, Tm5, Tf5 have the same physical meaning as Ts2, Tm2, and Tf2. Ts3 and Tf4 have the same physical meaning as Ts1 and Tf2. In contrast to Ts1, Tm1, and Tf1 which characterize the melting process of entire crystalline fraction of the first polymer, Ts3, Tm3, and Tf3 (Ts4, Tm4, and Tf4) characterize the melting process of only one of the polymorphic modifications of the third polymer. Ts3, Tm3, and Tf3 (Ts4, Tm4, and Tf4) have the same physical meaning for the characterization of the melting process of the polymorphic modification as Ts1, Tm1, and Tf1 for the characterization of the melting process of the crystalline fraction of the polymer.

In the example depicted in Fig. 10 the lower (upper) boundary value of the temperature range for the texturing (curling) process can be one of the following temperatures: Ts3, Tm3, Tf3, Ts4, Tm4, Tf4 and Ts5 (Tm3, Tf3, Ts4, Tm4, Tf4, Ts5, and Tm5), wherein the lower boundary value is less than the upper boundary value. For instance, the temperature range Tf4 - Ts5 can be selected when it is required that the crystalline fraction of the third polymer is almost completely molten and the crystalline fraction of the fourth polymer is almost completely in the solid state in the process of the texturing (curling) of the monofilament yarn. Alternatively, the temperature range Tm3 - Tf3 can be selected, when it is required that the only one of the polymorphic modifications of the third polymer is substantially molten and the rest of the crystalline fraction of the polymer blend is in a solid state in the process of the texturing (curling) of the monofilament yarn. As yet another alternative, the temperature range Ts4 - Tm4 can be selected, when it is required that the one of the polymorphic modifications of the third polymer is completely molten, another one of the polymorphic modifications of the third polymer is only partially molten, and the crystalline fraction of the fourth polymer is in the solid state in the process of the texturing (curling) of the monofilament yarn. As yet another alternative Tm4 can be taken as a reference temperature $T_R$ for the texturing (curling) process. Since the temperature of the filaments should not fall below the reference temperature $T_R$ during the course of texturizing the filaments, a lower boundary and an upper boundary of the temperature range can be defined as follows: the lower boundary is equal to $T_R$ and the upper boundary is equal to a surplus temperature $T_S$, wherein the surplus temperature $T_S$ being no more than a predetermined percentage larger than the lower boundary temperature in degrees Celsius, wherein the predetermined percentage is 15 %, preferably 10%, and more preferably 5%.

Independent from a particular structure of a DSC curve (e.g. number of peaks, overlapping/non overlapping peaks, etc.) another approach can be used for determination of the temperature range used for texturing (curling) process. The lower boundary *Tl* of the temperature range is determined according to the following equation:

$$\frac{\int_{Ts}^{Tl}(Heat\ flow(T) - Base\ line\ (T))dT}{\int_{Ts}^{Tf}(Heat\ flow(T) - Base\ line\ (T))dT} = \alpha 1 \ ,$$

and the upper boundary *Tu* is determined according to the following equation:

$$\frac{\int_{Ts}^{Tu}(Heat\ flow(T) - Base\ line\ (T))dT}{\int_{Ts}^{Tf}(Heat\ flow(T) - Base\ line\ (T))dT} = \alpha 2 .$$

*Heat flow (T)* is the original DSC curve (e.g. DSC curve 411 in Fig. 9). *Base line (T)* is a temperature dependent base line of the original DSC curve (e.g. base line 410 in Fig. 9). Ts is a lower boundary of a temperature range of the DSC curve (e.g. *Ts* (428) in Fig. 9). At this temperature the DSC curve coincides with its base line. *Tf* is an upper boundary of a temperature range of the DSC curve (e.g. *Tf* (428) in Fig. 9). At this temperature the DSC curve coincides with its base line. The following constrains apply for the equations above: *Ts<Tf,* $0<\alpha 1<\alpha 2<1$. $\alpha 1$ can be equal to 0.05, preferably to 0.09. $\alpha 2$ can be equal to 0.15, preferably to 0.11. The melting temperature Tm (e.g. Tm 429 in Fig. 9) can be determined as *Tl<Tm<Tu*. At Tm 429 a portion of a crystalline fraction of one of the polymers of the polymer blend and a portion of a crystalline fraction of the other one of the polymers of the polymer blend are in a molten state and another portion of the crystalline fraction of the one of the polymers of the polymer blend and another portion of the crystalline fraction of the other one of the polymers of the polymer blend are in a solid state.

With independent of the particular temperature range selected as the temperature range of the texturing process the desired temperature can be determined as a middle temperature of the selected temperature range. The desired temperature is equal to an average of an upper boundary of the selected temperature range and the lower boundary of the selected temperature range. The desired temperature can be used as the setting of the controller 70, i.e. be used as the desired temperature therein. In addition or as alternative the desired temperature can be specified as the selected temperature range or a range within the selected temperature range (e.g. a subrange of the selected temperature range).

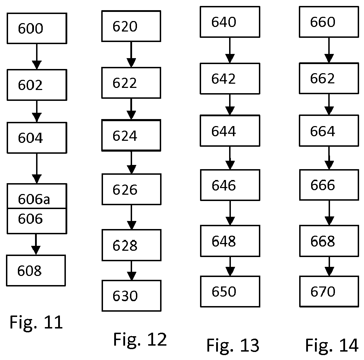

Fig. 11 illustrates a flowchart diagram of a method for manufacturing of a textured (curled) monofilament yarn, which can be used as a textured (curled) artificial turf yarn. The method can be executed using devices depicted in Fig. 1. The method begins with process block 600, wherein a monofilament yarn is provided. The monofilament yarn comprises a polymer blend of two or more polymers. As it is mentioned above the polymer blend can comprise immiscible polymers and at least one compatibilizer. Process block 602 is executed after 600. In process block 602 DSC data is received. The data comprises DSC data of a sample of the polymer blend measurement using a DSC system. The data characterizes melting process of different polymers of the blend. The data can further characterize melting processes of different polymorphic modifications of one of the polymers of the blend, if said polymer has polymorphic modifications. The sample can be a sample of the monofilament yarn. Alternatively the sample can be taken from the polymer blend used for manufacturing of the monofilament yarn.

Process block 604 is executed after process block 602. In process block 604 one or more melting temperatures of the monofilament yarn are determined using the DSC data. The determination of the melting temperatures can be performed as described above, by determining baseline, temperatures corresponding to maxima of the DSC curve, etc. Afterwards the desired temperature of the texturing process is determined using the one or more melting temperatures. Process block 606 is executed after process block 604. In process block 606 the monofilament yarn is textured (curled) using the texturing device to provide the textured artificial yarn, the controller 70 is programmed to hold the actual temperature at the determined desired temperature. As it is mentioned above the melting temperature can be a melting temperature of a crystalline fraction of the polymer of the blend. In case with the polymer of the blend has polymorphism, then the melting temperature can be a melting temperature of one of its polymorphic modifications.

The desired temperature can be selected within the following temperature ranges, preferably in the middle of the respective temperature range within which the desired temperature is selected. The temperature range can selected such that a portion of a crystalline fraction of the polymer blend is in a solid state in a process of the texturing (curling) of the monofilament yarn and another portion of the crystalline fraction of the polymer blend is in a molten state. The lower boundary of such a temperature range can be any of the following temperatures depicted on Figs. 8-10: Ts1, Tm1, Tf1, Tf01, Ts02, Ts2, Ts3, Tm3, Tf3, Ts4, Tm4, Tf4, Ts5. The upper boundary of such a temperature range can be any of the following temperatures depicted on Figs. 8-10: Tm1, Tf1, Tf01, Ts02, Ts2, Tm2, Tm3, Tf3, Ts4, Tm4, Tf4, Ts5, Tm5. The upper and the lower boundary temperatures have to be selected such that the upper boundary is greater than the lower boundary. Alternatively the upper boundary Tu and the lower boundary Tl can be determined according to the aforementioned equations.

Alternatively, the temperature range can be selected such that a crystalline fraction of one of the polymers is in a solid state in a process of the texturing (curling) of the monofilament yarn and a crystalline fraction of another one of the polymers is in a molten state in the process of the texturing (curling) of the monofilament yarn. The upper boundary of such a temperature range can be Ts02 depicted in Fig. 8 and the lower boundary temperature of such a temperature range can be Tf01 depicted in Fig. 8.

The temperature range can have a lower boundary temperature being greater or equal to one of the melting temperatures, which can be lowest one of the melting temperatures determined in process block 604 (e.g. Tm3). The temperature range can have an upper boundary temperature being less or equal another one of the melting temperatures, which can be the highest one of the melting temperatures determined in process block 604 (e.g. Tm5). According to the DSC data obtained for different polymer blends (in particular for the polymer blend comprising LLDPE and HDPE) an optimal temperature range for texturing (curling) can be 90-110 degrees Celsius.

As it is mentioned above, DSC curves provide plenty of information for determination of the melting temperatures which are used for the determination of the temperature range of the texturing (curling) of the monofilament yarn. For instance, the melting temperature of the polymer can be determined as a minimum temperature at which only a portion of a crystalline fraction of the respective polymer is in a molten state (e.g. Ts1, Tm1, Tf1, Ts2, Tm2, Tf2, Ts3, Tm3, Tf3, Ts4, Tm4, Tf4, Ts5, Tm5, Tf5). In case when the polymer has polymorphism, the melting temperature can be determined as a minimum temperature at which only a portion of its polymorphic modification is in a molten state (e.g. Ts3, Tm3, Tf3 for the melting of the polymorphic modification which melting process corresponds to the peak 215 in Fig. 10; Ts4, Tm4, Tf4 for the melting of the polymorphic modification which melting process corresponds to the peak 216 in Fig. 10). Alternatively or in addition the melting temperature can be determined as a temperature at which the DSC curve has its maximum (e.g. Tm1, Tm2, Tm3, Tm4, Tm5).

With independent of different approaches for selection/determination of the temperature range and/or the desired temperature for the texturing (curling) process, the temperature range and/or the desired temperature are selected such that only a portion of a crystalline fraction of the polymer blend in molten in the texturing (curling) process. With independent of the particular temperature range selected for the texturing process, the desired temperature can be determined as a middle temperature of the temperature range of the texturing process, i.e. as an average value of an upper boundary of the temperature range and lower boundary of the temperature range. In addition or as alternative the desired temperature can be determined as said temperature range or a range within the temperature range, wherein preferably the aforementioned average value is comprised in the range within the temperature range.

The texturing (curling) of the monofilament yarn can be performed for instance using any of the texturing (curling) devices depicted in Figs. 5-7. In addition an air jet texturing device can be used for the texturing (curling) process. Any of these devices can be operated such that texturing (curling) is made within the temperature range of the texturing process. This can be implemented by setting a desired temperature of the controller 70 to the desired temperature determined in process block 604. When the filament texturing (curling) device 114a is used, the controller 70 can be configured to control as described above the temperature of the toothed wheels (e.g. 123 and 124) and/or the temperature of the monofilament yarn entering the texturing device. When the stuffer box 114b is used for the texturing (curling) of the monofilament yarn in process block 606, the controller can be configured to control the temperature of the air injected through the nozzle 125 and/or the temperature of the monofilament yarn entering the texturing device 114b. When the venturi nozzle 114c is used for the texturing (curling) of the monofilament yarn in process block 606, the controller can be configured to control the temperature of the monofilament yarn entering the texturing device 114c and/or the temperature of the air injected into the venturi nozzle through the air inlet 133 and/or input port 130. When the air jet texturizing device is used for the texturing (curling) of the monofilament yarn in process block 606, the controller can be configured to control the temperature of the monofilament yarn entering the air jet texturizing device and/or the temperature of the compressed air injected into the air jet texturizing device. When the aforementioned thread-like regions are present in the monofilament yarn before the texturing (curling) the thread-like regions are present in the textured (curled) monofilament yarn.

Turning back to Fig. 11, an optional process block 606a can be executed before process block 606, preferably immediately before 606 process block. In process block 606a the temperature of the monofilament yarn is increased to a temperature within the temperature range of the texturing process using one or more heating devices (e.g. the heating device 117). In order to implement this process block the sensor 113, the controller 70, and the heating device can be used as described above.

Another optional process block 608 can be executed after process block 606, preferably immediately after process block 608. The textured (curled) monofilament yarn is cooled. The cooling can be performed using a cooling godet 120. The cooling can an a quenching procedure, wherein the textured (curled) monofilament yarn can be cooled down to a temperature of 20-25 degrees Celsius within 1-5 seconds.

Fig. 12 illustrates a flow chart diagram of a method for manufacturing of a monofilament yarn, which can be used in the method which flow chart is shown in Fig. 11. The method begins with process block 620. In process block 620 the polymer blend is created. The polymer blend can comprise two different types of polyethylene (e.g. LLDPE and HDPE). The polymer blend can be a more complex system. For instance it can be at least a three-phase system. In this case it can comprise a first polymer, a second polymer and a compatibilizer. The first polymer and the second polymer are immiscible. In other examples there may be additional polymers such as a third, fourth, or even fifth polymer that are also immiscible with the second polymer. There also may be additional compatibilizers which are used either in combination with the first polymer or the additional third, fourth, or fifth polymer. The first polymer forms polymer beads surrounded by the compatibilizer. The polymer beads may also be formed by additional polymers which are not miscible in the second polymer. The polymer beads are surrounded by the compatibilizer and are within the second polymer or mixed into the second polymer.

Process block 622 is executed after process block 620. In process block 622 the polymer blend is extruded into a monofilament yarn. This extrusion can be performed using the extruder 100 depicted in Fig. 1. The polymer blend is feed into the extruder 100 via inlet 101. Inside the extruder100 the polymers of the polymer blend are completely molten and the individual parts of the blend are homogeneously mixed. The polymer melt is pressed through a spinneret (or a wide slit nozzle) 102, 102a, whereby filaments of a specific shape are formed.

Process block 624 is executed after process block 622. The filaments are (rapidly) cooled down to a temperature where crystallization can take place. In the crystallization process the crystallites are forming to a percentage, which depends on the cooling rate. The higher the cooling rate, the less is the crystallinity and vice versa. Process block 624 can be executed using the cooling device 97 depicted in Fig. 1.

Process block 626 is executed after process block 624. In process block 626 the monofilament yarn is drawn e.g. to a factor of 4 - 6, i.e. the monofilament yarn is elongated 4-6 times. The preferred drawing ratio is 1:5.6. During the drawing process the monofilament yarn is heated to a temperature. The temperature can be at least 10-20 degrees Celsius (preferably 70-100 degrees Celsius for a polymer bled comprising Polyamide (PA) and/or Polyethylene (PET)) below the temperature of the last maximum on the DSC curve (e.g. Tm3 in Fig. 10) of the polymer blend used for the manufacturing of the monofilament yarn drawn in process block 626.

The temperature of the last maximum on the DSC curve is the temperature being the last in the sequence determined in process block 604. Process block 626 can be executed using the drawing device 115 or 115a. The drawing of the monofilament yarn forces the macromolecules to parallelize. This results in a higher degree of crystallinity and increased tensile strength after cooling, compared with undrawn filaments. In addition the drawing process can reshape the polymer beads such that the reshaped beads have thread-like regions.

Process block 628 is executed after process block 626. In process block 628 the monofilament yarn is cooled again. This can be done in the same way as in process block 624. The cooling godet or cooling drum 116 can be used for performing the cooling in process block 628.

Process block 630 is executed after process block 628. In process block 630 the monofilament yarn is drawn e.g. to a factor of 1.1 -1.3. The preferable drawing ratio is 1:1.2. During the drawing process the monofilament yarn is heated to a temperature. The temperature can be the same as in Process block 626. Process block 630 can be executed using the drawing device 118. Execution of process block 630 can result in relaxation of stress in the monofilament yarn.

Fig. 13 shows a flowchart which illustrates one method of creating the polymer blend which can be used for manufacturing of the monofilament yarn, e.g. according to the method which flow chart is shown in Fig. 12. In other the other words, the method which flow chart is shown in Fig. 13 can be an extension or alternative of process block 620. In this example the polymer mixture is a three-phase system and comprises the first polymer, a second polymer and the compatibilizer. The polymer blend may also comprise other components such as additives to color or provide flame or UV-resistance or improve the flowing properties of the polymer blend. First in step 640 a first blend is formed by mixing the first polymer with the compatibilizer. Additional additives may also be added during this step. Next in step 642 the first blend is heated. Next in step 644 the first blend is extruded. Then in step 646 the extruded first blend is then granulated or chopped into small pieces. Next in step 648 the granulated first blend is mixed with the second polymer. Additional additives may also be added to the polymer blend at this time. Finally in step 650 the granulated first blend is heated with the second polymer to form the polymer blend.

The heating and mixing may occur at the same time. The polymer blend created in process block 650 can be further processed in the same way as the polymer blend created in process block 620.

Fig. 14 shows a flowchart which illustrates a further example of how to create a polymer blend for manufacturing of the monofilament yarn, e.g. according to the method which flow chart is shown in Fig. 12. In other words, the method which flow chart is shown in Fig. 14 can be an extension or alternative of process block 620. In this example the polymer blend additionally comprises at least a third polymer. The third polymer is immiscible with the second polymer and the polymer blend is at least a four-phase system. The third polymer further forms the polymer beads surrounded by the compatibilizer with the second polymer. First in step 660 a first blend is formed by mixing the first polymer and the third polymer with the compatibilizer. Additional additives may be added to the first blend at this point. Next in step 662 the first blend is heated. The heating and the mixing of the first blend may be done at the same time. Next in step 664 the first blend is extruded. Next in step 666 the extruded first blend is granulated or chopped into tiny pieces. Next in step 668 the first blend is mixed with the second polymer. Additional additives may be added to the polymer blend at this time. Then finally in step 670 the heated first blend and the second polymer are heated to form the polymer blend. The heating and the mixing may be done simultaneously. The polymer blend created in process block 670 can be further processed in the same way as the polymer blend created in process block 620.

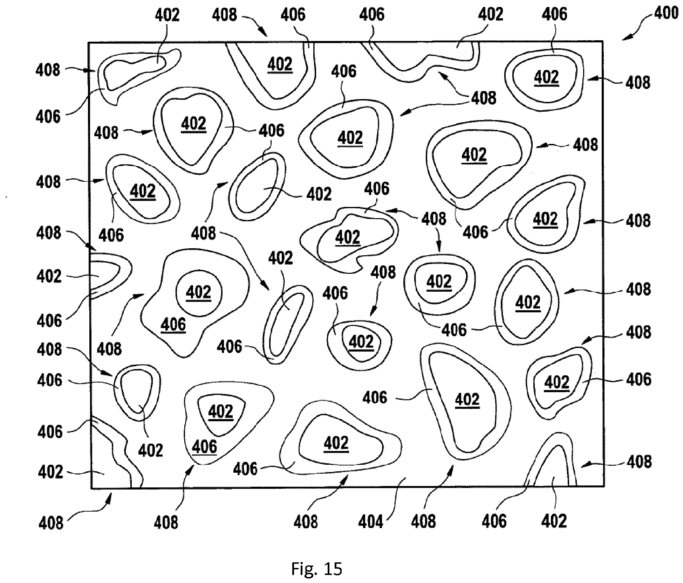

Fig. 15 shows a diagram which illustrates a cross-section of a polymer blend 400. The polymer blend 400 comprises a first polymer 402, a second polymer 404, and a compatibilizer 406. The first polymer 402 and the second polymer 404 are immiscible. The first polymer 402 is less abundant than the second polymer 404. The first polymer 402 is shown as being surrounded by compatibilizer 406 and being dispersed within the second polymer 404. The first polymer 402 surrounded by the compatibilizer 406 forms a number of polymer beads 408. The polymer beads 408 may be spherical or oval in shape or they may also be irregularly-shaped depending up on how well the polymer blend is mixed and the temperature. The polymer blend 400 is an example of a three-phase system. The three phases are the regions of the first polymer 402. The second phase region is the compatibilizer 406 and the third phase region is the second polymer 404. The compatibilizer 406 separates the first polymer 402 from the second polymer 406.

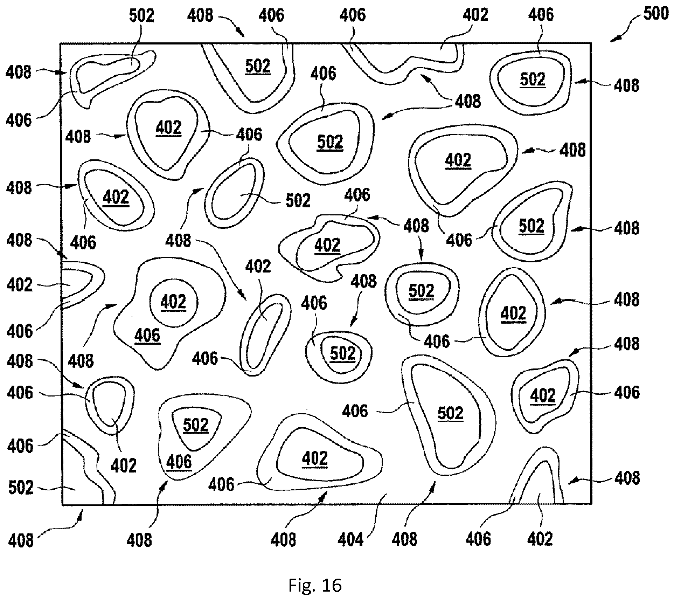

Fig. 16 shows a further example of a polymer blend 500. The example shown in Fig. 16 is similar to that shown in Fig. 15 however, the polymer mixture 500 additionally comprises a third polymer 502. Some of the polymer beads 408 are now comprised of the third polymer 502. The polymer blend 500 shown in Fig. 14 is a four-phase system. The four phases are made up of the first polymer 402, the second polymer 404, the third polymer 502, and the compatibilizer 406. The first polymer 402 and the third polymer 502 are not miscible with the second polymer 404. The compatibilizer 406 separates the first polymer 402 from the second polymer 404 and the third polymer 502 from the second polymer 404. In this example the same compatibilizer 406 is used for both the first polymer 402 and the third polymer 502. In other examples a different compatibilizer 406 could be used for the first polymer 402 and the third polymer 502.

The third of the first polymer can be a polar polymer. The third of the first polymer can be for instance polyamide. Alternatively the third or the first polymer can be polyethylene terephthalate or polybutylene terephthalate.

The polymer blend can comprise between 1% and 30% by weight the first polymer and the third polymer combined. In this example the balance of the weight may be made up by such components as the second polymer, the compatibilizer, and any other additional additives put into the polymer mixture.

Alternatively the polymer blend can comprise between 1 and 20% (or between 5% and 10%) by weight of the first polymer and the third polymer combined. Again, in this example the balance of the weight of the polymer mixture may be made up by the second polymer, the compatibilizer, and any other additional additives.

The polymer blend can comprise between 1% and 30% by weight the first polymer. In this example the balance of the weight may be made up for example by the second polymer, the compatibilizer, and any other additional additives.

Alternatively the polymer blend can comprises between 1% and 20% (or between 5% and 10%) by weight of the first polymer. In this example the balance of the weight may be made up by the second polymer, the compatibilizer, and any other additional additives mixed into the polymer mixture.

The second polymer can be a non-polar polymer. The second polymer can be polyethylene or polypropylene. The polymer blend can comprise between 80-90% by weight of the second polymer. In this example the balance of the weight may be made up by the first polymer, possibly the second polymer if it is present in the polymer mixture, the compatibilizer, and any other chemicals or additives added to the polymer mixture.

The polymer blend can further comprise any one of the following: a wax, a dulling agent, a ultraviolet stabilizer, a flame retardant, an anti-oxidant, a pigment, and combinations thereof. These listed additional components may be added to the polymer blend to give the artificial turf fibers made of the textured (curled) monofilament yarn other desired properties such as being flame retardant, having a green color so that the artificial turf more closely resembles grass and greater stability in sunlight.

The thread-like regions can be embedded in the second polymer of the textured (curled) monofilament yarn. The textured monofilament yarn can comprise a compatibilizer surrounding each of the thread-like regions and separating the first polymer from the second polymer. The thread-like regions can have a diameter of less than 20 (or 10) micrometer. Alternatively the thread-like regions can have a diameter of between 1 and 3 micrometer. The thread-like regions can have a length of less than 2 mm in longitudinal direction of the monofilament yarn.

The textured (curled) monofilament fiber can be used as artificial turf fiber for manufacturing of an artificial turf. The textured (curled) monofilament fiber can be incorporated into an artificial turf backing of the artificial turf. This can be implemented for instance by tufting or weaving the artificial turf fiber (i.e. the textured (curled) monofilament yarn) into the artificial turf backing. After the incorporation of the artificial turf fibers a further optional process can be performed, wherein the artificial turf fibers are bound to the artificial turf backing. For instance the artificial turf fibers may be glued or held in place by a coating or other material. Alternatively a liquid backing (e.g. latex or polyurethane) can be applied on the backside of the artificial turf backing such that the liquid backing wets the lower portions of the fiber and firmly includes the fiber after the solidification of the backing and thus causing a sufficient tuft lock.

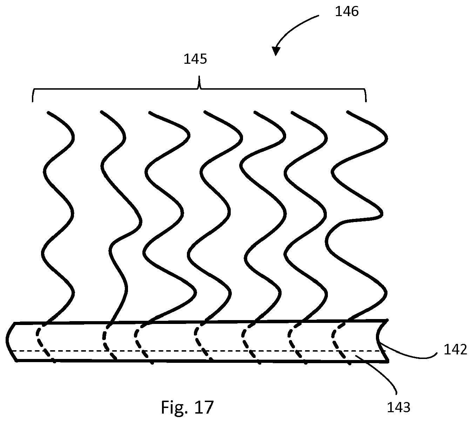

Fig. 17 shows an example of a cross-section of an example of artificial turf 146. The artificial turf 146 comprises an artificial turf backing 142. Artificial turf fiber 145 has been tufted into the artificial turf backing 142. A coating 143 is shown on the bottom of the artificial turf backing 142. The coating may serve to bind or secure the artificial turf fiber 145 to the artificial turf backing 142. The coating 143 may be optional. For example the artificial turf fibers 145 may be alternatively woven into the artificial turf backing 142. Various types of glues, coatings or adhesives could be used for the coating 143.

**Claims**

1. A method of manufacturing a textured artificial turf yarn (122) using a texturing device (114) and a controller (70) operable to hold an actual temperature of a texturing process in the texturing device at a desired temperature, wherein the method comprises:

   - providing (600) a monofilament yarn (119), wherein the monofilament yarn comprises a polymer blend of polymers (138, 139; 402, 404; 402, 404, 502);
   - receiving (602) differential scanning calorimetry, DSC, data of a sample of the polymer blend;
   - determining (604) one or more melting temperatures of the monofilament yarn using the DSC data;
   - determining (604) a desired temperature of the texturing process using the one or more melting temperatures; and
   - texturing (606) the monofilament yarn using the texturing device (114) to provide the textured artificial turf yarn, wherein the controller is programmed to hold the actual temperature at the determined desired temperature .

2. The method of claim 1, wherein the desired temperature (220, 221, 222, 235, 236, 223, 224, 419, 423, 429, 424, 420, 421, 422, 425, 200, 201, 202, 203, 204, 205, 206, 207) of the texturing process is determined such that a portion of a crystalline fraction of the polymer blend is in a solid state in a process of the texturing of the monofilament yarn and another portion of the crystalline fraction of the polymer blend is in a molten state in the process of the texturing of the monofilament yarn.

3. The method of any one of the preceding claims, wherein the one or more melting temperatures is two or more melting temperatures, wherein the desired temperature is determined within a temperature range or the desired temperature is determined as a range within the temperature range, wherein the temperature range has an upper boundary temperature being less or equal to one of the melting temperatures, wherein the temperature range has a lower boundary temperature being greater or equal to another one of the melting temperatures.

4. The method of any one of claims, wherein each of the one or more melting temperatures is a melting temperature of the respective polymer.

5. The method of claim 4, wherein the melting temperature of the respective polymer is a minimum temperature (220-222, 223-225) at which only a portion of a crystalline fraction of the respective polymer is in a molten state.

6. The method of claim 4 or 5, wherein the DSC data comprises a curve of a heat flow versus temperature (232), wherein the crystalline temperature of the respective polymer is a temperature (221, 224) at which a peak of the curve corresponding to a melting of a crystalline fraction of the respective polymer has its maximum.

7. The method of claim 1, wherein the desired temperature (235, 236) of the texturing process is determined such that a crystalline fraction of one of the polymers is in a solid state in a process of the texturing of the monofilament yarn and a crystalline fraction of another one of the polymers is in a molten state in the process of the texturing of the monofilament yarn.

8. The method of claim 1 or claim 2, wherein the DSC data comprises a curve (411) of a heat flow versus temperature in a temperature range (428, 430), wherein the curve has a base line (410), wherein the curve coincides with the base line at a lower boundary temperature (428) of the temperature range and at an upper boundary temperature (430) of the temperature range, wherein the upper boundary temperature and the lower boundary temperature are different temperatures, wherein the determined desired temperature complies with the following constraint: a ratio of an integral value and an overall integral value is within a predefined range, wherein the integral value is equal to an integral of a difference of the curve and the base line from the lower boundary temperature to the determined desired temperature (429), wherein the overall integral value is equal to an integral of the difference of the curve and the base line from the lower boundary temperature to the upper boundary temperature.

9. The method of claim 8, wherein the predefined range is 0.05 - 0.15, preferably 0.09-0.11.

10. The method of any one of the preceding claims, wherein the texturing device (114) comprises a stuffer box (114b) or a venturi nozzle (114c).

11. The method of any of the preceding claims, the method further comprising:

    - creating (620) the polymer blend, wherein the polymer blend is at least a three-phase system, wherein the polymer blend comprises a first polymer (402), a second polymer (404), and a compatibilizer (406), wherein the first polymer and the second polymer are immiscible, wherein the first polymer forms polymer beads (408) surrounded by the compatibilizer within the second polymer.

12. The method of claim 11, wherein the creating of the polymer blend comprises

    - forming (640) a first blend by mixing the first polymer with the compatibilizer;
    - heating (642) the first blend;
    - extruding (644) the first heated blend;
    - granulating (646) the extruded first blend;
    - mixing (648) the granulated first blend with the second polymer; and
    - heating (650) the granulated first blend with the second polymer to form the polymer blend.

13. A textured artificial turf yarn (122) manufactured according to the method claimed in any one of the previous claims.

14. A method of manufacturing an artificial turf carpet (146), wherein the method comprises:

    - manufacturing the textured artificial yarn according to the method claimed in any one of claims 1 through 12;
    - tufting the textured artificial turf yarn (122) into a backing (142).

15. An artificial turf carpet (146) manufactured according to the method of claim 14.

**Amended claims in accordance with Rule 137(2) EPC.**

1. A method of manufacturing a textured artificial turf yarn (122) using a texturing device (114) and a controller (70) operable to hold an actual temperature of a texturing process in the texturing device at a desired temperature, wherein the method comprises:

    - providing (600) a monofilament yarn (119), wherein the monofilament yarn comprises a polymer blend of polymers (138, 139; 402, 404; 402, 404, 502);
    - receiving (602) differential scanning calorimetry, DSC, data of a sample of the polymer blend;
    - determining (604) one or more melting temperatures of the monofilament yarn using the DSC data;
    - determining (604) a desired temperature of the texturing process using the one or more melting temperatures; and
    - texturing (606) the monofilament yarn using the texturing device (114) to provide the textured artificial turf yarn, wherein the controller is programmed to hold the actual temperature at the determined desired temperature,

    wherein the DSC data comprises a curve (411) of a heat flow versus temperature in a temperature range (428, 430), wherein the curve has a base line (410), wherein the curve coincides with the base line at a lower boundary temperature (428) of the temperature range and at an upper boundary temperature (430) of the temperature range, wherein the upper boundary temperature and the lower boundary temperature are different temperatures, wherein the determined desired temperature complies with the following constraint: a ratio of an integral value and an overall integral value is within a predefined range, wherein the integral value is equal to an integral of a difference of the curve and the base line from the lower boundary temperature to the determined desired temperature (429), wherein the overall integral value is equal to an integral of the difference of the curve and the base line from the lower boundary temperature to the upper boundary temperature, wherein the predefined range is 0.05 - 0.15, preferably 0.09 - 0.11,

wherein the texturing device (114) comprises a stuffer box (114b) or a venturi nozzle (114c).

2. The method of claim 1, wherein the desired temperature (220, 221, 222, 235, 236, 223, 224, 419, 423, 429, 424, 420, 421, 422, 425, 200, 201, 202, 203, 204, 205, 206, 207) of the texturing process is determined such that a portion of a crystalline fraction of the polymer blend is in a solid state in a process of the texturing of the monofilament yarn and another portion of the crystalline fraction of the polymer blend is in a molten state in the process of the texturing of the monofilament yarn.

3. The method of any one of the preceding claims, wherein the one or more melting temperatures is two or more melting temperatures, wherein the desired temperature is determined within a temperature range, wherein the temperature range has an upper boundary temperature being less or equal to one of the melting temperatures, wherein the temperature range has a lower boundary temperature being greater or equal to another one of the melting temperatures.

4. The method of any one of claims, wherein each of the one or more melting temperatures is a melting temperature of the respective polymer.

5. The method of claim 4, wherein the melting temperature of the respective polymer is a minimum temperature (220-222, 223-225) at which only a portion of a crystalline fraction of the respective polymer is in a molten state.

6. The method of claim 4 or 5, wherein the DSC data comprises a curve of a heat flow versus temperature (232), wherein the crystalline temperature of the respective polymer is a temperature (221, 224) at which a peak of the curve corresponding to a melting of a crystalline fraction of the respective polymer has its maximum.

7. The method of claim 1, wherein the desired temperature (235, 236) of the texturing process is determined such that a crystalline fraction of one of the polymers is in a solid state in a process of the texturing of the monofilament yarn and a crystalline fraction of another one of the polymers is in a molten state in the process of the texturing of the monofilament yarn.

8. The method of any one of the preceding claims, wherein at least two of the polymers are different types of polyethylene.

9. The method of any of the preceding claims, wherein the sample is taken from the polymer blend.

10. The method of any one of claims 1 through 8, wherein the sample is a sample of the monofilament yarn.

11. The method of any of the preceding claims, the method further comprising:

- creating (620) the polymer blend, wherein the polymer blend is at least a three-phase system, wherein the polymer blend comprises a first polymer (402), a second polymer (404), and a compatibilizer (406), wherein the first polymer and the second polymer are immiscible, wherein the first polymer forms polymer beads (408) surrounded by the compatibilizer within the second polymer.

12. The method of claim 11, wherein the creating of the polymer blend comprises

- forming (640) a first blend by mixing the first polymer with the compatibilizer;
- heating (642) the first blend;
- extruding (644) the first heated blend;
- granulating (646) the extruded first blend;
- mixing (648) the granulated first blend with the second polymer; and
- heating (650) the granulated first blend with the second polymer to form the polymer blend.

13. A textured artificial turf yarn (122) manufactured according to the method claimed in any one of the previous claims.

**14.** A method of manufacturing an artificial turf carpet (146), wherein the method comprises:

- manufacturing the textured artificial yarn according to the method claimed in any one of claims 1 through 12;
- tufting the textured artificial turf yarn (122) into a backing (142).

**15.** An artificial turf carpet (146) manufactured according to the method of claim 14.

Fig. 1

Fig. 2

Fig. 3

Fig. 4

Fig. 5

Fig. 6

Fig. 7

Fig. 8

Fig. 9

Fig. 10

```
┌─────────┐
│   600   │
└─────────┘
     │
     ▼
┌─────────┐
│   602   │
└─────────┘
     │
     ▼
┌─────────┐
│   604   │
└─────────┘
     │
     ▼
┌─────────┐
│  606a   │
├─────────┤
│   606   │
└─────────┘
     │
     ▼
┌─────────┐
│   608   │
└─────────┘
```

Fig. 11

```
┌─────────┐
│   620   │
└─────────┘
     │
     ▼
┌─────────┐
│   622   │
└─────────┘
     │
     ▼
┌─────────┐
│   624   │
└─────────┘
     │
     ▼
┌─────────┐
│   626   │
└─────────┘
     │
     ▼
┌─────────┐
│   628   │
└─────────┘
     │
     ▼
┌─────────┐
│   630   │
└─────────┘
```

Fig. 12

```
┌─────────┐
│   640   │
└─────────┘
     │
     ▼
┌─────────┐
│   642   │
└─────────┘
     │
     ▼
┌─────────┐
│   644   │
└─────────┘
     │
     ▼
┌─────────┐
│   646   │
└─────────┘
     │
     ▼
┌─────────┐
│   648   │
└─────────┘
     │
     ▼
┌─────────┐
│   650   │
└─────────┘
```

Fig. 13

```
┌─────────┐
│   660   │
└─────────┘
     │
     ▼
┌─────────┐
│   662   │
└─────────┘
     │
     ▼
┌─────────┐
│   664   │
└─────────┘
     │
     ▼
┌─────────┐
│   666   │
└─────────┘
     │
     ▼
┌─────────┐
│   668   │
└─────────┘
     │
     ▼
┌─────────┐
│   670   │
└─────────┘
```

Fig. 14

Fig. 15

Fig. 16

Fig. 17

**Europäisches Patentamt**
**European Patent Office**
**Office européen des brevets**

# EUROPEAN SEARCH REPORT

Application Number

EP 17 19 5136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/014386 A1 (SOELCH RICHARD ROBERT [US] ET AL) 22 January 2004 (2004-01-22)<br><br>* paragraphs [0006], [0018] - [0020], [0023], [0042], [0061], [0062], [0063] *<br>----- | 1,3,4,6, 8,10, 13-15 | INV.<br>D02G1/04<br>D02G1/12<br>D02G1/16<br>D02J1/08<br>E01C13/08 |
| Y | JP S61 19811 A (TOYO BOSEKI) 28 January 1986 (1986-01-28)<br><br>* paragraphs [0001], [0003]; claim 1; figures 1,2 *<br>----- | 1,3,4,6, 8,10, 13-15 | |
| A | EP 3 122 942 A1 (POLYTEX SPORTBELÄGE PRODUKTIONS-GMBH [DE]) 1 February 2017 (2017-02-01)<br>* paragraphs [0001], [0009], [0010], [0023] *<br>----- | 1-15 | |
| A | US 2010/285246 A1 (BECKER HINNERK GORDON [DE] ET AL) 11 November 2010 (2010-11-11)<br>* paragraphs [0070], [0071], [0144]; figure 3 *<br>----- | 1-15 | TECHNICAL FIELDS SEARCHED (IPC)<br><br>D02G<br>D02J<br>E01C<br>D01F<br>D06N |

The present search report has been drawn up for all claims

| Place of search | Date of completion of the search | Examiner |
|---|---|---|
| The Hague | 9 February 2018 | Van Beurden-Hopkins |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 5136

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2018

| Patent document cited in search report | Publication date | Patent family member(s) | Publication date |
|---|---|---|---|
| US 2004014386 A1 | 22-01-2004 | AU 2003253948 A1<br>US 2004014386 A1<br>WO 2004009890 A1 | 09-02-2004<br>22-01-2004<br>29-01-2004 |
| JP S6119811 A | 28-01-1986 | NONE | |
| EP 3122942 A1 | 01-02-2017 | AU 2014388095 A1<br>CA 2943447 A1<br>CN 105377391 A<br>EP 3122942 A1<br>HK 1217464 A1<br>JP 2017512927 A<br>KR 20160144979 A<br>US 2017121856 A1<br>WO 2015144223 A1 | 22-09-2016<br>01-10-2015<br>02-03-2016<br>01-02-2017<br>13-01-2017<br>25-05-2017<br>19-12-2016<br>04-05-2017<br>01-10-2015 |
| US 2010285246 A1 | 11-11-2010 | CN 101560275 A<br>CN 101597346 A<br>DE 102008005949 A1<br>EP 2235072 A2<br>ES 2586762 T3<br>PL 2235072 T3<br>PT 2235072 T<br>TW 201000542 A<br>TW 201002739 A<br>US 2010285246 A1<br>WO 2009092748 A2<br>WO 2009092752 A2 | 21-10-2009<br>09-12-2009<br>30-07-2009<br>06-10-2010<br>18-10-2016<br>31-10-2016<br>23-08-2016<br>01-01-2010<br>16-01-2010<br>11-11-2010<br>30-07-2009<br>30-07-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANZ FOURNE.** Synthetic Fibers. Carl Hanser Verlag GmbH & Co, 1999, 449-452